(19) Europäisches Patentamt
European Patent Office
Office européen des brevets

(11) EP 3 738 749 A1

(12) EUROPEAN PATENT APPLICATION

(43) Date of publication:
**18.11.2020 Bulletin 2020/47**

(21) Application number: **20174687.2**

(22) Date of filing: **14.05.2020**

(51) Int Cl.:
***B29C 64/153*** *(2017.01)*
***C08K 5/00*** *(2006.01)*
***C08L 23/10*** *(2006.01)*
***C08K 5/17*** *(2006.01)*
***C08K 3/04*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.05.2019 JP 2019093728**
**17.05.2019 JP 2019093599**
**02.04.2020 JP 2020066817**

(71) Applicant: **Ricoh Company, Ltd.**
**Tokyo 143-8555 (JP)**

(72) Inventors:
- **SAITO, Akira**
  **Tokyo, 143-8555 (JP)**
- **YAMASHITA, Yasuyuki**
  **Tokyo, 143-8555 (JP)**
- **OGAWA, Satoshi**
  **Tokyo, 143-8555 (JP)**
- **SUN, Yunsheng**
  **Tokyo, 143-8555 (JP)**
- **HIGUCHI, Shinzo**
  **Tokyo, 143-8555 (JP)**

(74) Representative: **SSM Sandmair Patentanwälte Rechtsanwalt Partnerschaft mbB**
**Joseph-Wild-Straße 20**
**81829 München (DE)**

# (54) THERMOPLASTIC RESIN POWDER, RESIN POWDER, RESIN POWDER FOR PRODUCING THREE-DIMENSIONAL OBJECT, THREE-DIMENSIONAL OBJECT AND THREE-DIMENSIONAL OBJECT PRODUCING METHOD

(57) Provided is a thermoplastic resin powder, including a heat-resistant antistatic agent in an amount of 0.01% by mass or greater but 30.0% by mass or less. Also provided is a resin powder, including resin particles and resin fine particles having a number-based primary particle diameter of 1.50 micrometers or less.

FIG. 3

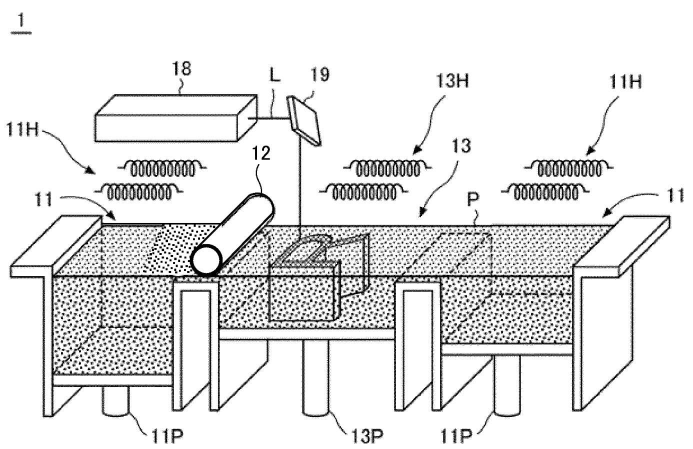


EP 3 738 749 A1

## Description

### BACKGROUND OF THE INVENTION

#### Field of the Invention

The present disclosure relates to a thermoplastic resin powder, a resin powder, a resin powder for producing a three-dimensional object, a three-dimensional object, a three-dimensional object producing apparatus, and a three-dimensional object producing method.

#### Description of the Related Art

In recent years, resin powders have been used as materials of plastic products of various fields. For example, a disclosed resin powder is a semiaromatic polyamide resin composition containing, for example, a semiaromatic polyamide, a polyvalent alcohol, and a fibrous reinforcing member (for example, see International Publication No. WO 2015/159834).

In recent years, resin powders have been used in various fields. Examples of resin powders used for three-dimensional objects include the resin powder described in Japanese Patent No. 4846425.

The existing semiaromatic polyamide resin composition described in International Publication No. WO 2015/159834 easily take charge, and high-quality plastic products have not been obtained with this semiaromatic polyamide resin composition.

The present disclosure has an object to provide a thermoplastic resin powder that has an excellent antistatic effect, can be suppressed from resin powder adhesion within an apparatus, and can produce a three-dimensional object having a neat object surface.

### SUMMARY OF THE INVENTION

According to a first embodiment of the present disclosure, a thermoplastic resin powder contains a heat-resistant antistatic agent in an amount of 0.01% by mass or greater but 30.0% by mass or less.

According to a second embodiment of the present disclosure, a resin powder includes resin particles and resin fine particles having a number-based primary particle diameter of 1.50 micrometers or less.

The present disclosure can provide a thermoplastic resin powder that has an excellent antistatic effect, can be suppressed from resin powder adhesion within an apparatus, and can produce a three-dimensional object having a neat object surface.

### BRIEF DESCRIPTION OF THE DRAWINGS

FIG. 1A is a schematic perspective view illustrating an example of a circular cylindrical resin particle;
FIG. 1B is a schematic side view of the approximately circular cylindrical resin particle illustrated in FIG. 1A;
FIG. 1C is a schematic side view illustrating an example of a shape of a circular cylindrical resin particle having ends with no vertices;
FIG. 1D is a schematic side view illustrating another example of a shape of a circular cylindrical resin particle having ends with no vertices;
FIG. 1E is a schematic side view illustrating another example of a shape of a circular cylindrical resin particle having ends with no vertices;
FIG. 1F is a schematic side view illustrating another example of a shape of a circular cylindrical resin particle having ends with no vertices;
FIG. 1G is a schematic side view illustrating another example of a shape of a circular cylindrical resin particle having ends with no vertices;
FIG. 1H is a schematic side view illustrating another example of a shape of a circular cylindrical resin particle having ends with no vertices;
FIG. 1I is a schematic side view illustrating another example of a shape of a circular cylindrical resin particle having ends with no vertices;
FIG. 2 is an image illustrating an example of a circular cylindrical resin particle;
FIG. 3 is a schematic view illustrating a three-dimensional object producing apparatus according to an embodiment of the present disclosure;

FIG. 4 is a flowchart illustrating an example of an operation of a three-dimensional object producing apparatus; and
FIG. 5 is a schematic perspective view illustrating an example of three-dimensional object producing apparatus of the present disclosure.

DESCRIPTION OF THE EMBODIMENTS

[First embodiment]

(Thermoplastic resin powder)

A thermoplastic resin powder of the present disclosure contains a heat-resistant antistatic agent in an amount of 0.01% by mass or greater but 30.0% by mass or less, preferably contains resin particles, and further contains other components as needed.

<Resin particles>

The shape of the resin particles is not particularly limited and may be appropriately selected depending on the intended purpose. Examples of the shape of the resin particles include shapes of circular cylindrical bodies, prismatic bodies, and spherical bodies. Among these shapes, circular cylindrical bodies are preferable because the antistatic effect is highly exerted for circular cylindrical particles, which mutually have a very large contact area and easily take charge.
The circular cylindrical bodies are not particularly limited and may be appropriately selected depending on the intended purpose. Examples of the circular cylindrical bodies include true-circular cylindrical bodies and elliptic cylindrical bodies. Among these circular cylindrical bodies, true-circular cylindrical bodies are preferable.
The circular cylindrical bodies encompass approximately circular cylindrical bodies. An approximate circle means a circle having a ratio (longer diameter/shorter diameter) of 1 or greater but 10 or less as a ratio of the longer diameter to the shorter diameter. The circle of a circular cylindrical body may be partially chipped.
The prismatic bodies are not particularly limited and may be appropriately selected depending on the intended purpose like the circular cylindrical bodies. The polygon of a prismatic body may be partially chipped.
The spherical bodies are not particularly limited and may be appropriately selected depending on the intended purpose like the circular cylindrical bodies. A spherical body may be partially chipped.
The diameter of the circle of a circular cylindrical body is not particularly limited, may be appropriately selected depending on the intended purpose, and is preferably 5 micrometers or greater but 200 micrometers or less. When the circle of a circular cylindrical body is an ellipse, the diameter refers to the longer diameter.
The length of one side of the polygon of a prismatic body is not particularly limited and may be appropriately selected depending on the intended purpose. The diameter of the minimum circle (minimum bounding circle) that completely encloses the polygon is preferably 5 micrometers or greater but 200 micrometers or less.
The diameter of a spherical body is not particularly limited, may be appropriately selected depending on the intended purpose, and is preferably 5 micrometers or greater but 200 micrometers or less.
The height of a circular cylindrical body, i.e., the distance between the two opposite circles (the distance between the top surface and the bottom surface) is not particularly limited, may be appropriately selected depending on the intended purpose, and is preferably 5 micrometers or greater but 200 micrometers or less.
The height of a prismatic body, i.e., the distance between the two opposite polygons (the distance between the top surface and the bottom surface) is not particularly limited and may be appropriately selected depending on the intended purpose like the height of a circular cylindrical body, and is preferably 5 micrometers or greater but 200 micrometers or less.
The two opposite circles (the top surface and the bottom surface) of a circular cylindrical body may have different areas. However, a ratio (r2/r1) of the diameter r2 of the circle with the larger area to the diameter r1 of the circle with the smaller area is preferably 1.5 or less and more preferably 1.1 or less because a smaller difference between the areas of the two circles enables a higher bulk density.
The two opposite polygons (the top surface and the bottom surface) of a prismatic body may have different areas. However, a ratio (S2/S1) of the area (S2) of the larger polygon to the area (S1) of the smaller polygon is preferably as close to 1 as possible because a smaller difference between the areas of the two polygons enables a higher bulk density.
In production of a three-dimensional object by a powder bed fusion (PBF) method, it is possible to improve the accuracy of an object or a molding by increasing the bulk density of the resin particles.
It is preferable that columnar resin particles such as circular cylindrical bodies and prismatic bodies have no vertices in order to increase the bulk density. The vertices refer to the corners present on the columnar body.
The shape of a circular cylindrical resin particle will be described with reference to FIG. 1A to FIG. 1I.

FIG. 1A is a schematic perspective view illustrating an example of a circular cylindrical resin particle. FIG. 1B is a schematic side view of the circular cylindrical resin particle illustrated in FIG. 1A. FIG. 1C is a schematic side view illustrating an example of a shape of a circular cylindrical resin particle having ends with no vertices. FIG. 1D to FIG. 1I are schematic side views illustrating another example of a shape of a circular cylindrical resin particle having ends with no vertices.

When the circular cylindrical body illustrated in FIG. 1A is observed from a side, the circular cylindrical body has a rectangular shape as illustrated in FIG. 1B, and has corner portions, i.e., vertices at four positions. FIG. 1C to FIG. 1I illustrate example shapes having no vertices at the ends.

Presence or absence of vertices on a columnar resin particle can be judged based on a projected image of a side surface of the columnar resin particle. For example, the side surface of the columnar resin particle is observed with, for example, a scanning electron microscope (instrument name: S4200, available from Hitachi, Ltd.), to capture the side surface in the form of a two-dimensional image. In this case, the projected image has a quadrangular shape, of which portions formed by respective pairs of adjoining two sides are referred to as ends. That being the case, any shape formed only of adjoining two straight lines has a corner, which is a vertex. As in FIG. 1C to FIG. 1I, when an end is formed by an arc, the end does not have a vertex.

For example, as illustrated in FIG. 2, a columnar resin particle 21 has a first surface 22, a second surface 23, and a side surface 24.

The first surface 22 includes a first facing surface 22a and an outer circumferential region 22b of the first surface, where the outer circumferential region 22b has a shape extending along the side surface 24. The outer circumferential region 22b of the first surface is a surface continuous from the first facing surface 22a via a curved surface, and is approximately orthogonal to the first facing surface 22a.

The second surface 23 includes a second facing surface 23a facing the first facing surface 22a and an outer circumferential region 23b of the second surface, where the outer circumferential region 23b has a shape extending along the side surface 24. The outer circumferential region 23b of the second surface is a surface continuous from the second facing surface 23a via a curved surface, and is approximately orthogonal to the second facing surface 23a.

The side surface 24 adjoins the first surface 22 and the second surface 23. The outer circumferential region 22b of the first surface and the outer circumferential region 23b of the second surface extend over the side surface 24.

The shape of the outer circumferential region 22b of the first surface and the outer circumferential region 23b of the second surface (hereinafter, may also be referred to as "outer circumferential region") needs at least to be a shape distinguishable from the side surface 24 in a scanning electron microscope (SEM) image. Specific examples of the shape of the outer circumferential region include a shape of the outer circumferential region partially integrated with the side surface 24, a shape of the outer circumferential region contacting the side surface 24, and a shape of the outer circumferential region having a space between the outer circumferential region and the side surface 24.

It is preferable that the outer circumferential regions be provided to have an in-plane direction approximately equal to the in-plane direction of the side surface 24.

Further, as illustrated in FIG. 2, the outer circumferential regions extend along the side surface 24 and are located over the side surface 24. The structure of the first surface and second surface, i.e., the structure of covering the contacting regions between the outer circumferential regions and the side surface 24 is referred to as bottle cap shape.

The method for making the shape of a resin particle vertex-free is not particularly limited and may be appropriately selected depending on the intended purpose. Examples of the method include known methods using devices for conglobation treatments such as high-speed rotation-type mechanical milling, high-speed impact-type mechanical milling, and surface melting by mechanical friction.

The melting point of the resin particles may be appropriately selected depending on the intended purpose. In consideration of, for example, the heatproof temperature of the resin particles when used for production of an exterior of an object or a molding, the melting point of the resin particles is preferably 100 degrees C or higher, more preferably 120 degrees C or higher, and yet more preferably 140 degrees C or higher.

The melting point of the resin particles can be measured by, for example, differential scanning calorimetry (DSC). Specifically, the melting point of the resin particles can be measured using a differential scanning calorimeter such as DSC-60A available from Shimadzu Corporation according to ISO3146 (Testing Methods for Transition Temperatures of Plastics, JIS K7121). The measuring method may be carried out by, for example, subjecting the resin particles to DSC measurement at a temperature elevation rate of 10 degrees C/min. The temperature of the top of an obtained endothermic peak or the temperature of the top of an obtained melting point peak is employed as the melting point. When the resin particles have a plurality of melting points, the higher melting point may be employed.

<Thermoplastic resin>

A thermoplastic resin refers to a resin that plasticizes and melts when heat is applied to the resin.

The thermoplastic resin is not particularly limited, may be appropriately selected depending on the intended

purpose, and may be a crystalline resin or a non-crystalline resin.

The crystalline resin refers to a resin having a detectable melting point peak in a measurement according to ISO3146 (Testing Methods for Transition Temperatures of Plastics, JIS K7121).

Examples of the thermoplastic resin include polyolefins, polyamides, polyesters, polyethers, polyphenylene sulfides, liquid crystal polymers (LCP), polyacetals (POM: Polyoxymethylene), polyimides, and fluororesins. One of these thermoplastic resins may be used alone or two or more of these thermoplastic resins may be used in combination.

Examples of polyolefins include polyethylene, polypropylene, and polymethylpentene. Polypropylene may be any selected from a block body, a random body, and a homo body, and may contain a composite material such as talc and glass fiber.

Examples of polyamides include: polyamide 410 (PA410), polyamide 6 (PA6), polyamide 66 (PA66, with a melting point of 265 degrees C), polyamide 610 (PA610), polyamide 612 (PA612), polyamide 11 (PA11), and polyamide 12 (PA12); and semi-aromatic polyamides such as polyamide 4T (PA4T), polyamide MXD6 (PAMXD6), polyamide 6T (PA6T), polyamide 9T (PA9T, with a melting point of 300 degrees C), and polyamide 10T (PA10T).

PA9T is referred to as polynonamethylene terephthalamide, and is a semi-aromatic series that contains: diamine containing 9 carbon atoms; and a terephthalic acid monomer, and that is aromatic at the carboxylic acid side. Examples of polyamides also include aramid produced from p-phenylenediamine and a terephthalic acid monomer, as examples of wholly aromatic series that are also aromatic at the diamine side, not only at the carboxylic acid side.

Examples of polyesters include polyethylene terephthalate (PET, with a melting point of 260 degrees C), polybutadiene terephthalate (PBT), and polylactic acid (PLA). Among these polyesters, polyesters containing aromatic series that partially contain terephthalic acid or isophthalic acid are preferable in terms of imparting heat resistance.

Examples of polyethers include polyaryl ketone and polyether sulfone.

Examples of polyaryl ketone include polyether ether ketone (PEEK), polyether ketone (PEK), polyether ketone ketone (PEKK), polyaryl ether ketone (PAEK), polyether ether ketone ketone (PEEKK), and polyether ketone ether ketone ketone (PEKEKK).

The thermoplastic resin may be a thermoplastic resin having two melting point peaks such as PA9T. The thermoplastic resin having two melting point peaks completely melts when the temperature becomes higher than or equal to the higher melting point peak. It is preferable that the thermoplastic resin powder contain one or more kinds of thermoplastic resins having a melting point of 100 degrees C or higher.

[Method for producing resin particles]

The method for producing resin particles is not particularly limited and may be appropriately selected depending on the intended purpose. Preferable examples of the method include milling or cutting a resin composition into a predetermined particle diameter.

Examples of the method for milling a resin composition into a predetermined particle diameter include a method of milling a pellet-shaped resin composition containing a thermoplastic resin with a milling machine and filtering out resin particles having particle diameters other than the predetermined particle diameter by classification or through a filter. When milling a resin composition by taking advantage of the brittleness of the resin composition, a suitable ambient temperature during milling is lower than or equal to the brittle fracture temperature of the resin composition, preferably lower than or equal to room temperature (25 degrees C), more preferably 0 degrees C or lower, yet more preferably -25 degrees C or lower, and particularly preferably -100 degrees C or lower. In a classification operation, it is preferable to collect resin particles having a particle diameter of 25 micrometers or greater but 80 micrometers or less, in order to improve the fluidity of the resin particles.

Examples of the method for cutting a resin composition into a predetermined particle diameter include a method of making a resin composition into a fibrous shape by extrusion molding, and cutting the obtained fibers into the predetermined particle diameter.

Of these methods, the method of making a resin composition into a fibrous shape by extrusion molding, and cutting the obtained fibers into the predetermined particle diameter is preferable. When the method for producing resin particles is the method of making a resin composition into a fibrous shape by extrusion molding, and cutting the obtained fibers into the predetermined particle diameter, there is an advantage that it is relatively easy to vary the shape of resin particles, based on the fiber diameter (the area of the top surface and the bottom surface) and the cutting width (corresponding to the height of a columnar body).

-Crystallinity control-

By controlling the crystal size and the crystal orientation of a crystalline resin in the resin particles, it is possible to reduce occurrence of error due to a recoating process for forming a layer of a powder material in an object production process in a high-temperature environment, in the case of producing a three-dimensional object by a PBF method.

Examples of the method for controlling the crystal size and the crystal orientation include: methods using external stimuli, such as thermal treatment, drawing, ultrasonic treatment, and external electric field application; a method using a crystal nucleating agent; and a method of dissolving a resin in a solvent and slowly volatilizing the solvent to increase crystallinity.

Examples of the thermal treatment include annealing treatment for heating a resin composition to a temperature higher than or equal to the glass transition temperature of the resin composition in order to increase crystallinity.

Examples of the annealing treatment include a treatment of maintaining a resin composition to which a crystal nucleating agent is added at a temperature that is 50 degrees C higher than the glass transition temperature of the resin composition for 3 days, and subsequently cooling the resin composition slowly to room temperature (25 degrees C).

Drawing is performed in order to improve the orientation of a resin by drawing, to increase crystallinity. The drawn resin is subjected to machining such as milling and cutting, to be formed into resin particles.

Examples of drawing include a treatment of dissolving and stirring a resin at a temperature that is 30 degrees C or more higher than the melting point of the resin while drawing the melt with an extruder to a size that is 1 time or more but 10 times or less greater, to form the melt to a fibrous shape.

The maximum draw ratio in the drawing is appropriately set depending on, for example, the melt viscosity of a resin composition. When using an extruder, the number of nozzle openings is not particularly limited, but productivity is higher with more nozzle openings.

A higher draw ratio enables a better crystal orientation. Therefore, the draw ratio is preferably 2.0 times or higher, and because an ideal crystal orientation is easier to obtain, more preferably 2.5 times or higher. After drawing, an annealing step or a relaxing step may be added, or care may be taken so as not for the heated fibers to deform.

In drawing, the shape of the resin particles is determined by the shape of the nozzle opening of the extruder. For example, the shape of the nozzle opening may be circular in order to obtain circular cylindrical resin particles, and the shape of the nozzle opening may be polygonal in order to obtain prismatic resin particles.

Examples of the ultrasonic treatment include a treatment of adding a glycerin solvent (reagent grade, available from Tokyo Chemical Industry Co., Ltd.) to the resin particles in an amount that is about 5 times higher than the amount of the resin particles, subsequently heating the resultant to a temperature that is 20 degrees C higher than the melting point of the resin, and applying ultrasonic waves to the resultant for 2 hours using an ultrasonic generator such as ULTRASONICATOR UP200S available from Hielscher Ultrasonics GmbH at 24 kHz at an amplitude of 60%. In this case, after application of ultrasonic waves, it is preferable to wash the resin particles at room temperature using an isopropanol solvent, and subjecting the resin particles to vacuum drying.

Examples of the external electric field application include a treatment of heating the resin particles at a temperature higher than or equal to the glass transition temperature of the resin particles, subsequently applying a 600 V/cm alternating-current electric field (500 Hz) to the resultant for 1 hour, and subsequently cooling the resultant slowly.

The temperature width (temperature window) relating to a crystal phase change, i.e., the difference between the melting start temperature during heating and the recrystallizing temperature during cooling is preferably more than 3 degrees C in terms of preventing warpage of an object, and more preferably 5 degrees C or more because a highly accurate object can be produced. In production of a three-dimensional object with a laser according to a PBF method, selection of a resin and other components having decomposition temperatures higher than the laser heating temperature enables suppression of smoke emission due to laser irradiation.

The height of the circular cylindrical or prismatic resin particles is not particularly limited, may be appropriately selected depending on the intended purpose, and is preferably 5 micrometers or greater but 200 micrometers or less, and when producing a three-dimensional object according to a PBF method, more preferably 30 micrometers or greater but 200 micrometers or less in terms of matchability with the PBF method. When the height of the resin particles is in the preferable range, there are advantages that the strength of an object is improved, and that warpage of an object or molding can be suppressed.

When the resin particles are circular cylindrical bodies, the ratio of the height of the resin particles to the diameter of the circle at the top or bottom surface of the resin particles is preferably 0.5 times or higher but 2 times or lower, and in terms of machinability, more preferably 1 time or higher but 2 times or lower. When the resin particles are prismatic bodies, the ratio of the height of the resin particles to the diameter of the minimum circle (minimum bounding circle) that completely encloses the polygon at the top or bottom surface of the resin particles is preferably 0.5 times or higher but 2 times or lower in terms of machinability.

<Heat-resistant antistatic agent>

The heat-resistant antistatic agent means an antistatic agent that has heat resistance and undergoes a 5% mass reduction at a temperature of 150 degrees C or higher when measured by a method according to ISO 7111-1987.

The thermoplastic resin powder contains the heat-resistant antistatic agent in an amount of 0.01% by mas or greater but 30.0% by mass or less, and preferably in an amount of 0.1% by mass or greater but 5.0% by mass or less.

With the heat-resistant antistatic agent contained in an amount of 0.01% by mass or greater but 30.0% by mass or less, the thermoplastic resin powder has an excellent antistatic effect, can be suppressed from resin powder adhesion within an apparatus, and can produce a three-dimensional object having a neat object surface.

The heat-resistant antistatic agent may be internally added or externally added to the resin powder. In the case of internal addition, the heat-resistant antistatic agent is kneaded in the resin composition in the method for producing resin particles.

The heat-resistant antistatic agent has been confirmed to be particularly effective for light-weight thermoplastic resins having a density of lower than 1 g/$cm^3$ such as polyethylene and polypropylene, because the influence of an electrostatic force on such resins is relatively high as a force applied to the resin powder. The heat-resistant antistatic agent has also been confirmed to be particularly effective for hydrophobic resin powders having no polarity over the surface, because resin particles easily take charge over the surface and are likely to be influenced by an electrostatic force.

For example, it is common for PBF-type three-dimensional object producing apparatuses to pre-heat the surface of resin powders during production of objects, and antistatic agents that act to activate the interface in a high-temperature, low-humidity environment have unstable effects. Hence, an antistatic agent that lowers the resistivity of resins directly is preferable. As an antistatic agent that lowers the resistivity of resins directly, for example, an external additive may be used, and an external additive that has charge pairs with which resins are easily charged may be added. An internal additive is more preferable because the antistatic effect of an external additive is reduced due to the influence of detachment of the external additive along with repeated production of objects and the influence of, for example, burying of the external additive along with thermal softening of the resin powder, leading to degradation of recyclability. A preferable internal additive used for lowering the resistivity of a resin is one that exerts an antistatic effect by a low amount addition. This is because the higher the addition ratio of the internal additive, the more the physical properties intrinsic to the resin are spoiled, leading to degradation of strength, such as tensile strength.

In the present disclosure, in order to improve the antistatic effect, it is preferable to use a heat-resistant antistatic agent that undergoes a 5% mass reduction at a temperature of 150 degrees C or higher when subjected to temperature elevation at 10 degrees C/min according to TG/DTA, which is a measuring method compliant with ISO 7111-1987.

Such a heat-resistant antistatic agent is used with a view to leaking a surface potential for prevention of charge accumulation. However, typical coating-type or mixing-type surfactants volatilize during three-dimensional object production that is carried out at a high temperature, leading to antistatic effect degradation at a high temperature.

Examples of the heat-resistant antistatic agent include carbon black, Ketjen black, carbon nanotube, polypyrrole, polythiophene, cationic surfactants, anionic surfactants, zwitterionic surfactants, and nonionic surfactants.

As the heat-resistant antistatic agent, for example, a conductive compound CABELEC (a registered trademark of Cabot Corporation) (CA6141 grade) may be used.

With a view to long-term use, a high-molecular-weight antistatic agent is preferred to a low-molecular-weight antistatic agent. Examples of the high-molecular-weight antistatic agent include polyethylene oxide, polyacrylates, and quaternary ammonium salt copolymers, and by chemical names, glycerin mono-fatty acid esters, fatty acid diethanolamide, alkyl diethanolamine, alkyl sulfonates, alkyl benzenesulfonate, alkyl trimethylammonium salt, alkyl benzyldimethylammonium salt, alkyl betaine, alkyl imdazoliumbetaine, and boron amine zwitterionic polyethylene polymer.

Examples of the high-molecular-weight antistatic agents in terms of stability include heat-resistant antistatic agents having special structures such as AS 113 and AS310E available from ADEKA Corporation, and BIOMICELLE BN105 available from Boron Laboratory Co., Ltd.

The heat-resistant antistatic agent may be an inorganic substance, examples of which include: carbon black, graphene, and carbon nanotube; and metal oxide particles such as zinc oxide and titanium oxide.

In terms of the antistatic effect, preferable as the heat-resistant antistatic agent is a donor-acceptor-hybrid-type antistatic agent formed of a composition containing: one or more kinds of a semipolar organic compound that contains in a molecule thereof, one group of atoms represented by structural formula (1) below and at least one straight-chain saturated hydrocarbon group containing from 11 through 22 carbon atoms; and one or more kinds of a basic organic compound that contains in a molecule thereof, one group of basic nitrogen atoms and at least one straight-chain saturated hydrocarbon group containing from 11 through 22 carbon atoms.

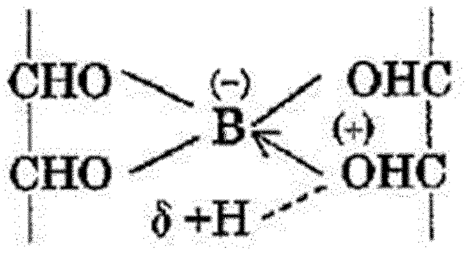

···(1)

Examples of the semipolar organic compound that contains in a molecule thereof, one group of atoms represented by structural formula (1) above and at least one straight-chain saturated hydrocarbon group containing from 11 through 22 carbon atoms include the compounds represented by structural formulae (2) to (8) below.

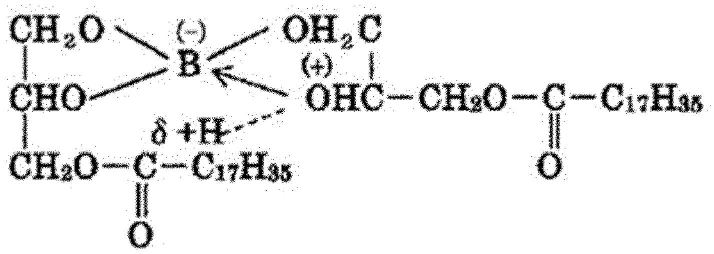

······· (2)

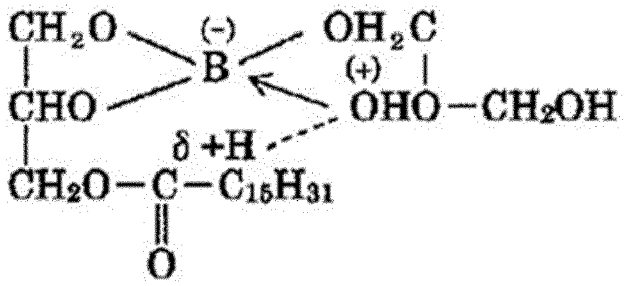

······· (3)

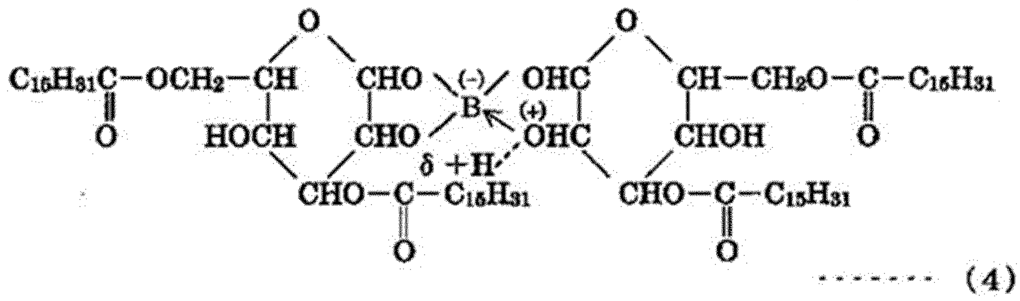

······· (4)

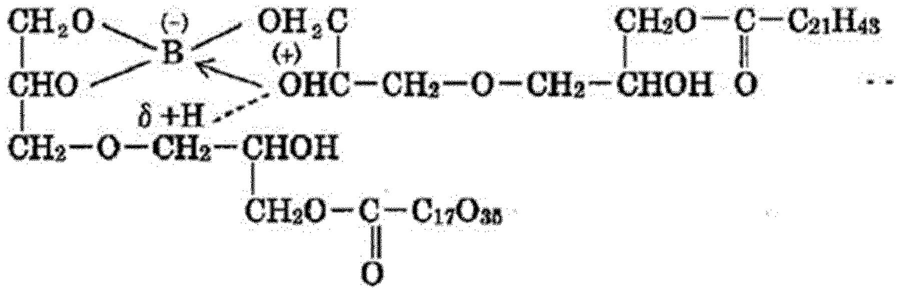

······· (5)

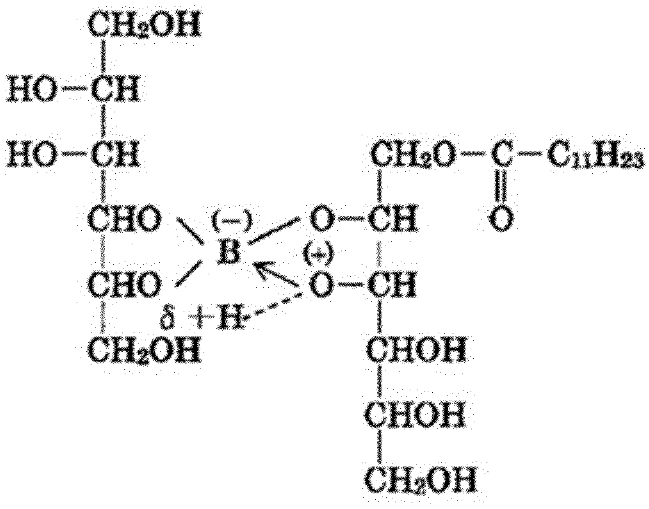

······· (6)

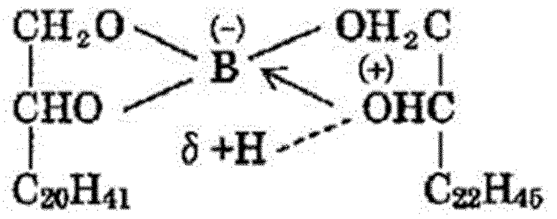

······· (7)

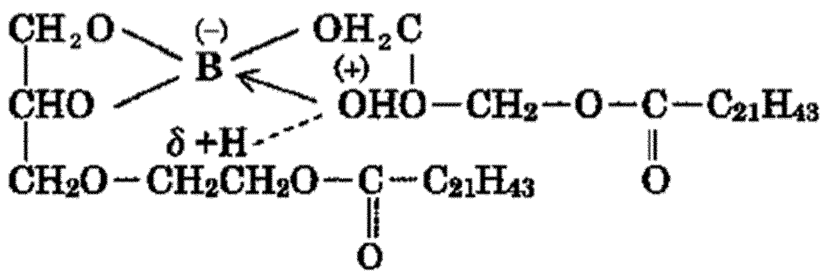

·· (8)

Examples of the basic organic compound that contains in a molecule thereof, one group of basic nitrogen atoms and at least one straight-chain saturated hydrocarbon group containing from 11 through 22 carbon atoms include the compounds represented by structural formulae (9) to (18) below.

$C_{22}H_{45}-NH_2$ ......... (9)

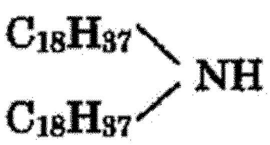

······· (10)

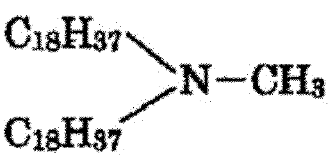

······· (11)

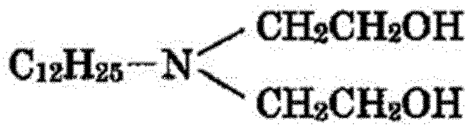

(1 2)

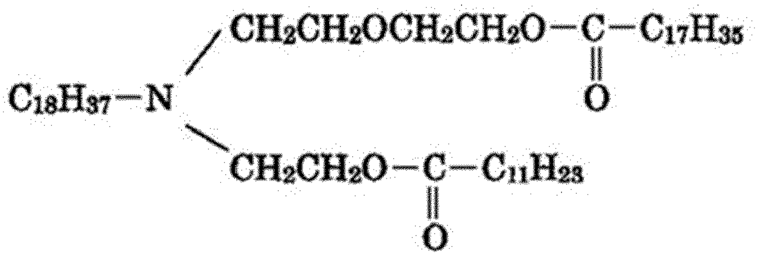

(1 3)

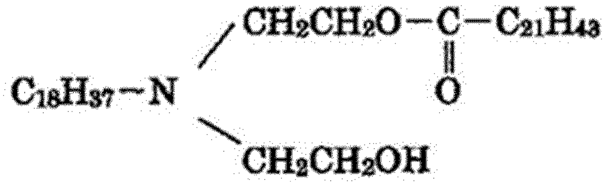

(1 4)

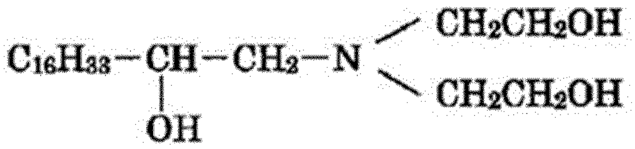

(1 5)

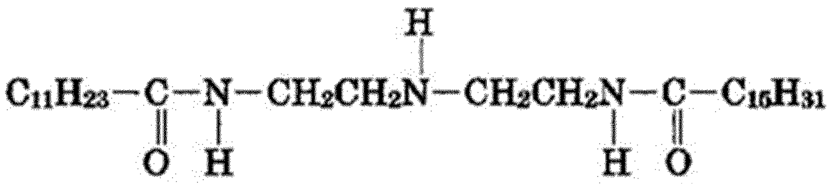

(16)

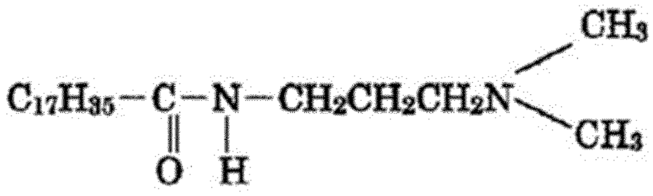

(17)

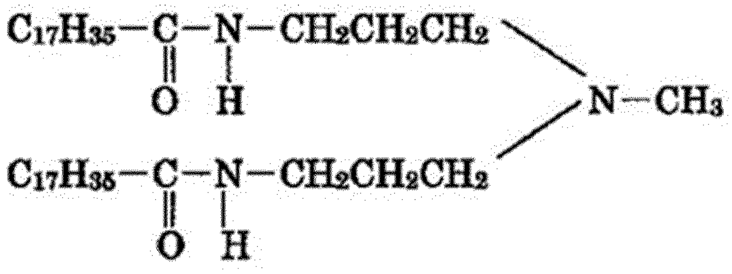

(18)

<Other components>

The other components of the resin powder are not particularly limited and may be appropriately selected depending on the intended purpose. Examples of the other components include: additives such as a degradation inhibitor,

a fluidizer, a reinforcement, a flame retardant, a plasticizer, and a crystal nucleating agent and non-crystalline resins. One of these other components may be used alone or two or more of these other components may be used in combination. The other components may be used with these other components mixed in each resin particle, or may be used to coat the surface of each resin particle.

«Degradation inhibitor»

The thermoplastic resin powder may contain a degradation inhibitor in order to maintain thermal stability of molecules and suppress resin degradation such as crosslinkage or decomposition.
Examples of the degradation inhibitor include metal chelate agents, ultraviolet absorbers, polymerization inhibitors, and antioxidants. When an antioxidant used as the degradation inhibitor is a powder, by coating the powder antioxidant over the perimeter of resin pellets via an oily component such as a lubricant and subsequently mixing the resultant, it is possible to have the antioxidant uniformly mixed with the resin powder without producing a masterbatch of the antioxidant.
Examples of the metal chelate agents include hydrazide-based, phosphate-based, and phosphite-based compounds.
Examples of the ultraviolet absorbers include triazine-based compounds.
Examples of the polymerization inhibitors include copper acetate.
Examples of the antioxidants include hindered phenol-based, phosphorus-based, and sulfur-based compounds.
Examples of the hindered phenol-based antioxidants include various additives such as radical scavengers.
Examples of the hindered phenol-based antioxidants include $\alpha$-tocopherol, butyl hydroxytoluene, sinapyl alcohol, vitamin E, octadecyl-3-(3,5-di-tert-butyl-4-hydroxyphenyl)propionate, 2-tert-butyl-6-(3'-tert-butyl-5'-methyl-2'-hydroxybenzyl)-4-methylphenylacrylate, 2,6-di-tert-butyl-4-(N,N-dimethylaminomethyl)phenol, 3,5-di-tert-butyl-4-hydroxybenzyl phosphonate diethylester, 2,2'-methylenebis(4-methyl-6-tertbutylphenol), 2,2'-methylenebis(4-ethyl-6-tert-butylphenol), 4,4'-methylenebis(2,6-di-tertbutylphenol), 2,2'-methylenebis(4-methyl-6-cyclohexylphenol), 2,2'-dimethylene-bis(6-$\alpha$-methyl-benzyl-p-cresol), 2,2'-ethylidene-bis(4,6-di-tert-butylphenol), 2,2'-butylidene-bis(4-methyl-6-tert-butylphenol), 4,4'-butylidenebis(3-methyl-6-tert-butylphenol), triethylene glycol-N-bis-3-(3-tert-butyl-4-hydroxy-5-methylphenyl)propionate, 1,6-hexanediol bis[3-(3,5-di-tert-butyl-4-hydroxyphenyl)propionate], bis[2-tert-butyl-4-methyl 6-(3-tert-butyl-5-methyl-2-hydroxybenzyl)phenyl]terephthalate, 3,9-bis{2-[3-(3-tert-butyl-4-hydroxy-5-methylphenyl)propionyloxy]-1,1,-dimethylethyl}-2,4,8,10-tetraoxaspiro[5,5]undecane, 4,4'-thiobis(6-tert-butyl-m-cresol), 4,4'-thiobis(3-methyl-6-tert-butylphenol), 2,2'-thiobis(4-methyl-6-tert-butylphenol), bis(3,5-di-tert-butyl-4-hydroxybenzyl)sulfide, 4,4'-dithiobis(2,6-di-tert-butylphenol), 4,4'-tri-thiobis(2,6-di-tert-butylphenol), 2,2-thiodiethylenebis- [3-(3,5-di-tert-butyl-4-hydroxyphenyl)propionate], 2,4-bis(n-octylthio)-6-(4-hydroxy-3,5-di-tert-butylanilino)-1,3,5-triazine, N,N'-hexamethylenebis-(3,5-di-tert-butyl-4-hydroxyhydrocinnamide), N,N'-bis[3-(3,5-di-tert-butyl-4-hydroxyphenyl)propionyl]hydrazine, 1,1,3-tris(2-methyl-4-hydroxy-5-tert-butylphenyl)butane, 1,3,5-trimethyl-2,4,6-tris(3,5-di-tert-butyl-4-hydroxybenzyl)benzene, tris(3,5-di-tert-butyl-4-hydroxyphenyl)isocyanurate, tris(3,5-di-tert-butyl-4-hydroxybenzyl)isocyanurate, 1,3,5-tris(4-tert-butyl-3-hydroxy-2,6-dimethylbenzyl)isocyanurate, 1,3,5-tris2[3(3,5-di-tert-butyl-4-hydroxyphenyl)propionyloxy]ethyl isocyanurate, tetrakis[methlene-3-(3,5-di-tert-butyl-4-hydroxyphenyl)propionate]methane, triethylene glycol-N-bis-3-(3-tert-butyl-4-hydroxy-5-methylphenyl)propionate, triethylene glycol-N-bis-3-(3-tert-butyl-4-hydroxy-5-methylphenyl)acetate, 3,9-bis[2-{3-(3-tert-butyl-4-hydroxy-5-methylphenyl)acetyloxy}-1,1-dimethylethyl]-2,4,8,10-tetraoxaspiro[5,5]undecane, tetrakis[methylene-3-(3-tert-butyl-4-hydroxy-5-methylphenyl)propionate]methane, 1,3,5-trimethyl-2,4,6-tris(3-tert-butyl-4-hydroxy-5-methylbenzyl)benzene, tris(3-tert-butyl-4-hydroxy-5-methylbenzyl)isocyanurate, octadecyl-3-(3,5-di-tert-butyl-4-hydroxyphenyl)propionate, 3,9-bis[2-{3-(3-t-butyl-4-hydroxy-5-methylphenyl)propionyloxy}-1,1-dimethylethyl]-2,4,8,10-tetraoxaspiro[5,5]undecane, tetrakis[methylene-3-(3',5'-di-t-butyl-4'-hydroxyphenyl)propionate]methane, and 1,3,5-tris(3,5-di-tert-butyl-4-hydroxyphenylmethyl)-2,4,6-trimethylbenzene. One of these hindered phenol-based antioxidants may be used alone or two or more of these hindered phenol-based antioxidants may be used in combination.
Among these hindered phenol-based antioxidants, tetrakis[methylene-3-(3-tert-butyl-4-hydroxy-5-methylphenyl)propionate]methane, octadecyl-3-(3,5-di-tert-butyl-4-hydroxyphenyl)propionate, 3,9-bis[2-{3-(3-t-butyl-4-hydroxy-5-methylphenyl)propionyloxy}-1,1-dimethylethyl]-2,4,8,10-tetraoxaspiro[5,5]undecane, and tetrakis[methylene-3-(3',5'-dit-butyl-4'-hydroxyphenyl)propionate]methane are preferable in terms of stability at high temperature.
Examples of the phosphorus-based antioxidants include: phosphorous acid, phosphoric acid, phosphonous acid, and phosphonic acid; esters of phosphite compounds, phosphate compounds, phosphonite compounds, and phosphonate compounds; and tertiary phosphine. One of these phosphorus-based antioxidants may be used alone or two or more of these phosphorus-based antioxidants may be used in combination.
Examples of the phosphite compounds include triphenyl phosphite, tris(nonylphenyl) phosphite, tridecyl phosphite, trioctyl phosphite, trioctadecyl phosphite, didecylmonophenyl phosphite, dioctylmonophenyl phosphite, diisopropylmonophenyl phosphite, monobutyldiphenyl phosphite, monodecyldiphenyl phosphite, monooctyldiphenyl phosphite,

tris(diethylphenyl)phosphite, tris(di-isopropylphenyl)phosphite, tris(di-n-butylphenyl)phosphite, tris(2,4-di-tert-butylphenyl)phosphite, tris(2,6-di-tert-butylphenyl) phosphite, distearylpentaerythritol diphosphite, bis(2,4-di-tert-butylphenyl)pentaerythritol diphosphite, bis(2,6-di-tert-butyl-4-methylphenyl)pentaerythritol diphosphite, bis(2,6-di-tert-butyl-4-ethylphenyl)pentaerythritol diphosphite, bis{2,4-bis(1-methyl-1-phenylethyl)phenyl}pentaerythritol diphosphite, phenylbisphenol A pentaerythritol diphosphite, bis(nonylphenyl)pentaerythritol diphosphite, and dicyclohexylpentaerythritol diphosphite. One of these phosphite compounds may be used alone or two or more of these phosphite compounds may be used in combination.

Among these phosphite compounds, distearylpentaerythritol diphosphite, bis(2,4-di-tert-butylphenyl)pentaerythritol diphosphite, bis(2,6-di-tert-butyl-4-methylphenyl)pentaerythritol diphosphite, and bis{2,4-bis(1-methyl-1-phenylethyl)phenyl}pentaerythritol diphosphite are preferable in terms of stability at high temperature.

Commercially available products may be used as these phosphite compounds.

Examples of commercially available products of distearylpentaerythritol diphosphite include ADEKASTAB PEP-8 (registered trademark, available from ADEKA Corporation), and JPP681S (registered trademark, available from Johoku Chemical Co., Ltd.).

Examples of commercially available products of bis(2,4-di-tert-butylphenyl)pentaerythritol diphosphite include ADEKASTAB PEP-24G (registered trademark, available from ADEKA Corporation), ALKANOX P-24 (registered trademark, available from Great Lakes), ULTRANOX P626 (registered trademark, available from GE Specialty Chemicals), DOVERPHOS S-9432 (registered trademark, available from Dover Chemical), and IRGAOFOS126 and 126FF (registered trademark, available from CIBA SPECIALTY CHEMICALS).

Examples of commercially available products of bis(2,6-di-tert-butyl-4-methylphenyl)pentaerythritol diphosphite include ADKASTAB PEP-36 (registered trademark, available from ADEKA Corporation).

Examples of commercially available products of bis{2,4-bis(1-methyl-1-phenylethyl)phenyl}pentaerythritol diphosphite include ADEKASTAB PEP-45 (registered trademark, available from ADEKA Corporation), and DOVERPHOS S-9228 (registered trademark, available from Dover Chemical).

Examples of other phosphite compounds include compounds that react with divalent phenols and have a cyclic structure.

Examples of the compounds that react with divalent phenols and have a cyclic structure include 2,2'-methylenebis(4,6-di-tert-butylphenyl)(2,4-di-tert-butylphenyl)phosphite, 2,2'-methylenebis(4,6-di-tert-butylphenyl)(2-tert-butyl-4-methylphenyl)phosphite, and 2,2-methylenebis(4,6-di-tert-butylphenyl)octyl phosphite.

Examples of the phosphate compounds include tributyl phosphate, trimethyl phosphate, tricresyl phosphate, triphenyl phosphate, trichlorophenyl phosphate, triethyl phosphate, diphenylcresyl phosphate, diphenylmonoorthoxenyl phosphate, tributoxyethyl phosphate, dibutyl phosphate, dioctyl phosphate, octadecyl phosphate, and diisopropyl phosphate. One of these phosphate compounds may be used alone or two or more of these phosphate compounds may be used in combination.

Among these phosphate compounds, triphenyl phosphate, octadecyl phosphate, and trimethyl phosphate are preferable in terms of stability at high temperature.

Examples of the phosphonite compounds include tetrakis(2,4-di-tert-butylphenyl)-4,4'-biphenylene diphosphonite, tetrakis(2,4-di-tert-butylphenyl)-4,3'-biphenylene diphosphonite, tetrakis(2,4-di-tert-butylphenyl)-3,3'-biphenylene diphosphonite, tetrakis(2,6-di-tert-butylphenyl)-4,4'-biphenylene diphosphonite, tetrakis(2,6-di-tert-butylphenyl)-4,3'-biphenylene diphosphonite, tetrakis(2,6-di-tert-butylphenyl)-3,3'-biphenylene diphosphonite, bis(2,4-di-tert-butylphenyl)-4-phenyl-phenyl phosphonite, bis(2,4-di-tert-butylphenyl)-3-phenyl-phenyl phosphonite, bis(2,6-di-n-butylphenyl)-3-phenyl-phenyl phosphonite, bis(2,6-di-tert-butylphenyl)-4-phenyl-phenyl phosphonite, and bis(2,6-di-tert-butylphenyl)-3-phenyl-phenyl phosphonite. One of these phosphonite compounds may be used alone or two or more of these phosphonite compounds may be used in combination.

Among these phosphonite compounds, tetrakis(di-tert-butylphenyl)-biphenylene diphosphonite, bis(di-tert-butylphenyl)-phenyl-phenyl phosphonite, tetrakis(2,4-di-tert-butylphenyl)-biphenylene diphosphonite, and bis(2,4-di-tert-butylphenyl)-phenyl-phenyl phosphonite are preferable because these phosphonite compounds can be used in combination with phosphite compounds.

Examples of the phosphonate compounds include dimethyl benzene phosphonate, diethyl benzene phosphonate, and dipropyl benzene phosphonate.

Examples of the tertiary phosphine include triethyl phosphine, tripropyl phosphine, tributyl phosphine, trioctyl phosphine, triamyl phosphine, dimethylphenyl phosphine, dibutylphenyl phosphine, diphenylmethyl phosphine, diphenyloctyl phosphine, triphenyl phosphine, tri-p-tolylphosphine, trinaphthyl phosphine, and diphenylbenzyl phosphine. One of these tertiary phosphines may be used alone or two or more of these tertiary phosphines may be used in combination. Among these tertiary phosphines, triphenyl phosphine is preferable in terms of long-term stability at high temperature.

When using two or more kinds of degradation inhibitors in combination, some combinations have a more remarkable effect. For example, a hindered phenol-based antioxidant and a phosphorus-based antioxidant used in combination as the degradation inhibitor have an effect of complementarily improving stability, leading to an effect of

making the long-term thermal stability better.

The content of the degradation inhibitor is preferably 0.01% by mass or greater but 10% by mass or less, more preferably 0.05% by mass or greater but 5% by mass or less, and yet more preferably 0.1% by mass or greater but 0.4% by mass or less relative to the total amount of the resin powder in terms of preventing long-term degradation. A preferable range of the content of each degradation inhibitor when two or more kinds of degradation inhibitors are used in combination is the same as the range described above. When the content of the degradation inhibitor is in the preferable range, an effect of preventing thermal degradation of the resin powder is sufficiently obtained, physical properties of an object produced with recycled resin powder that has been used for object production are improved, and an effect of preventing thermal discoloration of the resin powder is also obtained. Furthermore, stability of a high-molecular-weight antistatic agent can be increased. Hence, it is more preferable to use a degradation inhibitor in combination, when using a high-molecular-weight antistatic agent.

«Fluidizer»

The fluidizer is not particularly limited and may be appropriately selected depending on the intended purpose. Examples of the fluidizer include spherical particles formed of an inorganic material.

The volume average particle diameter of the spherical particles formed of an inorganic material is not particularly limited, may be appropriately selected depending on the intended purpose, and is preferably less than 10 micrometers.

The content of the fluidizer is not particularly limited and may be appropriately selected depending on the intended purpose so long as the content is a sufficient content for coating the surface of particles, and is preferably 0.1% by mass or greater but 10% by mass or less relative to the total amount of the resin powder.

Examples of the inorganic material of the spherical particles include silica, alumina, titania, zinc oxide, magnesium oxide, tin oxide, iron oxide, copper oxide, hydrated silica, silica surface-modified with a silane coupling agent, and magnesium silicate. Among these inorganic materials, silica, titania, hydrated silica, and silica surface-modified with a silane coupling agent are preferable in terms of the effect of improving fluidity, and silica surface-modified with a silane coupling agent to have hydrophobicity is more preferable in terms of costs.

«Reinforcement»

Examples of the reinforcement include inorganic fiber fillers, bead fillers, glass filler described in International Publication No. WO 2008/057844, glass beads, carbon fiber, and aluminum balls. One of these reinforcements may be used alone or two or more of these reinforcements may be used in combination.

The inorganic fiber fillers are not particularly limited and may be appropriately selected depending on the intended purpose. Examples of the inorganic fiber fillers include carbon fiber, inorganic glass fiber, and metallic fiber.

The bead fillers are not particularly limited and may be appropriately selected depending on the intended purpose. Examples of the bead fillers include carbon beads, inorganic glass beads, and metallic beads.

The thermal conductivity of the inorganic fiber fillers and the bead fillers is higher than the thermal conductivity of the resin powder. Therefore, when the surface of the resin powder is irradiated with laser in selective laser sintering (SLS) or LS object production, heat of the irradiated part diffuses to outside the laser-irradiated part. For this reason, when a resin powder having no sharp melt property and mixed with a fiber filler or a bead filler is irradiated with laser, the resin powder outside the irradiated part is heated due to heat diffusion and excessively melted, leading to a poor object production accuracy. However, when a resin powder containing a crystalline thermoplastic resin to have a sharp melt property and mixed with a fiber filler or a bead filler is irradiated with laser, the resin powder outside the irradiated part is less likely to be melted even if heated due to heat diffusion, making it possible to maintain a high object production accuracy.

The average fiber diameter of the inorganic fiber filler is not particularly limited, may be appropriately selected depending on the intended purpose, and is preferably 1 micrometer or greater but 30 micrometers or less.

The average fiber length of the inorganic fiber filler is not particularly limited, may be appropriately selected depending on the intended purpose, and is preferably 30 micrometers or greater but 500 micrometers or less.

When the average fiber diameter and the average fiber length of the inorganic fiber filler are in the preferable ranges, there are advantages that the strength of an object is improved, and that the surface roughness of an object can be of an equal level as the surface roughness of an object containing no fiber fillers.

The content of the inorganic fiber filler is preferably 5% by mass or greater but 60% by mass or less relative to the total amount of the resin powder. When the content of the inorganic fiber filler is 5% by mass or greater, the strength of an object is improved. When the content of the inorganic fiber filler is 60% by mass or less, object productivity is improved.

The circularity of the bead filler is not particularly limited, may be appropriately selected depending on the intended purpose, and is preferably 0.8 or greater but 1.0 or less.

The circularity can be calculated according to the following formula: circularity = $4\pi S/L^2$, where S represents the area (the number of pixels representing the bead filler, when an image of the bead filler is captured), and L represents the perimeter.

The volume average particle diameter of the bead filler is not particularly limited, may be appropriately selected depending on the intended purpose, and is preferably 10 micrometers or greater but 200 micrometers or less.

The volume average particle diameter can be measured using, for example, a particle size distribution measuring instrument (available from Microtracbel Corporation, MICROTRAC MT3300EXII).

The content of the bead filler is preferably 5% by mass or greater but 60% by mass or less relative to the total amount of the resin powder. When the content of the bead filler is 5% by mass or greater, the strength of an object is improved. When the content of the bead filler is 60% by mass or less, object productivity is improved.

«Flame retardant»

Examples of the flame retardant include various halogen-based, phosphorus-based, inorganic hydrated metal compound-based, nitrogen-based, and silicone-based flame retardants. Various flame retardants for buildings, automobiles, or ship outfitting may be used in the resin powder. When using two or more kinds of flame retardants in combination, a combination of a halogen-based flame retardant and an inorganic hydrated metal compound-based flame retardant can improve flame retardancy.

The resin powder may contain: a fibrous substance such as glass fiber, carbon fiber, and aramid fiber; or an inorganic reinforcement such as inorganic layered silicates such as talc, mica, and montmorillonite. According to such an embodiment, enhancement of physical properties and enhancement of flame retardancy can both be satisfied at the same time.

The flame retardancy of the resin powder can be evaluated according to, for example, JIS K6911, JIS L1091 (ISO6925), JIS C3005, and a heat generation test (cone calorimeter).

The content of the flame retardant is preferably 1% by mass or greater but 50% by mass or less and more preferably 10% by mass or greater but 30% by mass or less relative to the total amount of the resin powder. When the content of the flame retardant is 1% by mass or greater, a sufficient flame retardancy is obtained. When the content of the flame retardant is 50% by mass or less, changes of the melt-solidification property of the resin powder is suppressed, making it possible to prevent degradation of the object production accuracy and degradation of physical properties of an object.

It is preferable that the thermoplastic resin powder be as dry as not to influence object production. Therefore, it is possible to produce an object using resin particles dried with a vacuum drier or silica gel.

<Various properties of thermoplastic resin powder>

-Density-

The density of the thermoplastic resin powder is preferably 0.8 g/cm$^3$ or higher but 1.4 g/cm$^3$ or lower, and in terms of the effect of the antistatic agent, more preferably 0.8 g/cm$^3$ or higher but 1.0 g/cm$^3$ or lower. When the density of the thermoplastic resin powder is 0.8 g/cm$^3$ or higher, secondary aggregation of the particles can be suppressed in a recoating process for forming a layer of the powder material during object production. On the other hand, for use as substitution for metals, the density of the thermoplastic resin powder is preferably 1.4 g/cm$^3$ or lower for the needs for weight saving.

The density of the thermoplastic resin powder can be obtained by measurement of the true density. The true density can be calculated based on the volume of a sample obtained by varying the volume and the pressure of a gas (He gas) at a constant temperature using a dry automatic densimeter (ACCUPYC 1330, available from Shimadzu Corporation) employing a gas phase substitution method, and based on the mass of the sample measured.

-50% cumulative volume-based particle diameter $D_{50}$-

The 50% cumulative volume-based particle diameter $D_{50}$ of the thermoplastic resin powder is preferably 5 micrometers or greater but 200 micrometers or less, and in terms of dimensional stability, more preferably 5 micrometers or greater but 50 micrometers or less. A ratio (Mv/Mn) obtained by dividing the volume average particle diameter (Mv) of the resin powder by the number average particle diameter (Mn) of the resin powder is preferably 2.00 or less, more preferably 1.50 or less, and yet more preferably 1.20 or less in terms of improving the object production accuracy.

The 50% cumulative volume-based particle diameter $D_{50}$ and Mv/Mn can be measured using, for example, a particle size distribution measuring instrument (available from Microtracbel Corporation, MICROTRAC MT3300EXII).

-Resistivity-

When the surface resistivity of the thermoplastic resin powder measured under the conditions including a temperature of 25 degrees C (room temperature), a relative humidity of from 65% through 67%, and an application voltage of 250 V can be controlled to a range of $1\times10^5$ Ω or higher but $1\times10^{14}$ Ω or lower, it is possible to impart an antistatic effect to the resin powder, significantly overcome whirling up or adhesion of the resin powder, and suppress object formation failure.

By reducing the surface resistivity of the thermoplastic resin powder, it is possible to suppress particles, which are formed of the thermoplastic resin powder, from charge accumulation due to friction between the particles and friction between the particles and an apparatus along with movement of the particles during use in three-dimensional object production, making it possible to obtain an effect of suppressing whirling up of the powder caused by repulsion between the particles due to an electrostatic force, and adhesion of the powder to metallic parts that are electrically conductive.

It is preferable that the surface resistivity of the thermoplastic resin powder be controlled to a range of $1\times10^5$ Ω or higher but $1\times10^{14}$ Ω or lower, and that the volume resistivity of the thermoplastic resin powder be in a range of from $1\times10^5$ Ω·cm or higher but $1\times10^{15}$ Ω·cm or lower.

It is preferable that the surface resistivity be controlled to a range of $1\times10^5$ Ω or higher but $1\times10^{13}$ Ω or lower, because the amount of adhesion is significantly reduced. However, because an extremely low resistivity makes repulsion between particles due to an electrostatic force between the particles weaker to make fluidity poorer, the surface resistivity is preferably $1\times10^5$ Ω or higher.

The surface resistivity and the volume resistivity of the thermoplastic resin powder can be measured and discerned using, for example, resistor cells for high resistivity (available from Agilent Technologies Inc., AGILENT 16008B BIAS RESISTIVELY CELL) as electrodes, and a high resistance meter (available from Agilent Technologies Inc., AGILENT 4339B HIGH RESISTANCE METER) as a measuring instrument.

As the high-temperature resistivity, the resistivity is measured with the devices and instrument described above after the thermoplastic resin powder is subjected to vacuum drying at 150 degrees C and left to stand for about 30 minutes.

The high-temperature resistivity is preferably $1\times10^5$ Ω·cm or higher but $1\times10^{15}$ Ω·cm or lower.

- Recyclability-

Using the thermoplastic resin powder, it is possible to perform object production without spoiling the antistatic effect even through repeated used of excess particles, providing an excellent recyclability.

In order to prevent the resin powder from being charged, it is effective to externally add particles of a material having an opposite polarity to the resin. However, the externally added particles may be detached from the resin powder due to friction between the powder and an apparatus or friction between powder particles, or may be buried in the resin powder due to thermal softening of the resin powder through the object production process. This influences in a manner to spoil the antistatic effect and degrade the recyclability through repeated object production.

In the present disclosure, such a material is kneaded in the thermoplastic resin powder, and hence is not detached or buried through repeated object production. Therefore, a high recyclability is maintained.

As a method for confirming the recyclability, it is effective to repeat a test of returning an unsintered, unmelted particles of the resin powder used for object production into a supplying bed, and performing object production in the same manner.

Even after the test for recycled powder is performed once or more with a PBF-type object producing apparatus (available from Ricoh Company, Ltd., AMS5500P), the recycled powder used in the present disclosure can be suppressed from adhesion to metallic parts, and from a phenomenon that any adhered resin powder on a movable part such as a recoater grows large and eventually falls onto a powder surface formed flat to disturb object production.

If a largely grown powder lump described above falls onto a powder surface and the region is irradiated with laser or an ink is discharged to the region, this constitutes a factor of a phenomenon that a locally ridged object is produced and contacts the recoater during formation of a powder surface of the next layer to shift the object in a wrong way, or a phenomenon that the powder lump fuses with the object to form an unintentional protrusion over the surface layer of the object.

<Applications>

The thermoplastic resin powder of the present disclosure has an appropriate balance among parameters such as particle size, particle size distribution, heat transfer characteristic, melt viscosity, bulk density, fluidity, melting temperature, and recrystallizing temperature, and is suitably used in various three-dimensional object producing methods using resin powders, such as SLS methods, selective mask sintering (SMS) methods, multi jet fusion (MJF) methods, high speed sintering (HSS) methods, and binder jetting (BJ) methods.

The thermoplastic resin powder of the present disclosure is suitably used for surface modifiers, spacers, lubricants, paints, grindstones, additives, secondary battery separators, foods, cosmetics, and clothes. In addition, the thermoplastic resin powder may be used as materials or substitution materials for metals used in the fields of, for example, automobiles, precision equipment, semiconductors, aerospace, and medical care. Among these applications, application as a resin powder for producing a three-dimensional object for producing various articles three-dimensionally is particularly preferable.

(Resin powder for producing three-dimensional object)

A resin powder for producing a three-dimensional object of the present disclosure contains a heat-resistant antistatic agent in an amount of 0.01% by mass or greater but 30.0% by mass or less, and when measured according to a triboelectric charging method under the conditions described below, has a surface charge potential of within ±100 V.

[Conditions]

After the thermoplastic resin powder is supplied from a supplying tank to an object forming tank with a stainless steel (SUS) recoater rotated at 500 m/minute for 10 minutes at a temperature that is 10 degrees C lower than the melting point of the thermoplastic resin powder, the surface charge potential at the surface of the powder layer in the object forming tank at 100 degrees C is measured.

The surface charge potential measured according to the triboelectric charging method under the conditions described above is within ±100 V, preferably within ±40 V, and more preferably within ±10 V.

When the surface charge potential measured according to the triboelectric charging method under the conditions described above is ±100 V or lower, it is possible to obtain an excellent effect of preventing adhesion by recoating without degrading the strength of an object and with the addition amount of additives saved as much as possible.

A three-dimensional object produced by laser sintering using the resin powder for producing a three-dimensional object of the present disclosure has few internal defects and can achieve a stable strength and a stable object appearance. The powder may be used not only in laser sintering but also in film formation. Although it is difficult to obtain a typical film, a film can be obtained because the powder can be ground.

The resin powder for producing a three-dimensional object of the present disclosure has an excellent long-term recyclability. By producing objects according to, for example, a PBF method, a MJF method, or a HSS method using the brand-new resin powder of the present embodiment and recycled powder, it is possible to produce objects stably. Existing powders that initially have a low tendency toward adhesion by recoating nevertheless cause adhesion through repeated use and fail to make object surfaces uniform, leading to degradation of the strength of the objects. However, three-dimensional object production using the resin powder for producing a three-dimensional object of the present disclosure can be suppressed from adhesion by recoating not only initially but continuously.

The recycled powder is a resin powder that has remained unused for producing an object, when object production is performed for 50 hours using, for example, a SLS-type object producing apparatus (available from Ricoh Company, Ltd., AM S5500P). When brand-new resin powder is added in an amount of 30% by mass to the recycled powder and object production for 50 hours is repeated twice, the amount of adhesion by recoating does not increase and a three-dimensional object with no production defects can be obtained. Evaluation can be performed using a multi-purpose dog-bone-like test specimen having a length of 150 mm, compliant with international organization for standardization (ISO) 3167 Type 1A and formed of the resin powder.

(Three-dimensional object producing method and three-dimensional object producing apparatus)

A three-dimensional object producing method of the present disclosure includes a step of forming a powder material layer formed of a resin powder and a step of melting the powder material layer. Through repetition of these steps, a three-dimensional object is produced.

A three-dimensional object producing apparatus of the present disclosure includes a powder material layer forming unit configured to form a powder material layer formed of a resin powder and a melting unit configured to melt the powder material layer, and further includes other units as needed.

<Powder material layer forming step and powder material layer forming unit>

The powder material layer forming step is a step of forming a powder material layer formed of a resin powder, and is performed by a powder material layer forming unit.

It is preferable to form the powder material layer over a support.

The support is not particularly limited and may be appropriately selected depending on the intended purpose

so long as the resin powder can be placed over the support. Examples of the support include a table having a placing surface over which the resin powder is placed, and a base plate of an apparatus illustrated in FIG. 1 of Japanese Unexamined Patent Application Publication No. 2000-328106.

The surface of the support, i.e., the placing surface over which the resin powder is placed may be, for example, a smooth surface, a coarse surface, a flat surface, or a curved surface. It is preferable that the placing surface have a coefficient of thermal expansion different from a three-dimensional object produced through heating and melting and subsequent cooling and solidification of the organic materials in the resin powder, because the three-dimensional object can be easily removed from such a placing surface.

The method for placing the resin powder over the support is not particularly limited and may be appropriately selected depending on the intended purpose. Examples of a method for placing the resin powder in the form of a thin layer include a method using, for example, a known counter rotating mechanism (counter roller) employed in a selective laser sintering method described in Japanese Patent No. 3607300, a method for spreading the resin powder to have a form of a thin layer with such a member as a brush, a roller, and a blade, a method for pressing the surface of the resin powder with a pressing member to spread the resin powder to have a form of a thin layer, and a method using a known powder laminated object manufacturing apparatus.

Placing the resin powder over the support in the form of a thin layer using, for example, the counter rotating mechanism (counter roller), the brush, roller, or blade, and the pressing member may be performed in, for example, the following manner.

That is, with, for example, the counter rotating mechanism (counter roller), the brush, the roller, or the blade, or the pressing member, the resin powder is placed over the support that is disposed within an outer frame (may also be referred to as, for example, "mold", "hollow cylinder", or "tubular structure") in a manner that the support can lift upward and downward while sliding against the inner wall of the outer frame. When the support used is a support that can lift upward and downward within the outer frame, the support is disposed at a position slightly lower than the upper-end opening of the outer frame, i.e. at a position lower by an amount corresponding to the thickness of a layer of the resin powder, and then the resin powder is placed over the support. In this way, the resin powder can be placed over the support in the form of a thin layer.

The thickness of a layer of the powder material is not particularly limited, and may be appropriately selected depending on the intended purpose. The average thickness per layer is preferably 1 micrometer or greater but 500 micrometers or less and more preferably 10 micrometers or greater but 200 micrometers or less.

<Melting step and melting unit>

The step of melting the powder material layer may be appropriately changed. Examples of the method for performing the step include an electromagnetic irradiation method, and a method using an inhibitor or an absorbent. Among these methods, electromagnetic irradiation is preferable, and selective electromagnetic irradiation is more preferable.

Electromagnetic irradiation may be appropriately changed. Examples of electromagnetic irradiation include a laser light source, an infrared irradiation source, a microwave generator, a radiant heater, and a LED lamp. These devices may be combined. When using a laser light source, both of the followings are available: selective direct laser irradiation, and planar laser irradiation using a mask. Of these methods, selective direct laser irradiation is preferred.

When using a mask, a three-dimensional object of the present embodiment can be produced employing a selective mask sintering (SMS) technique. A SMS process is described in, for example, United States Patent No. 6,531,086. In a SMS process, a blocking mask is used to selectively block infrared radiation to selectively irradiate a part of a layer of the powder material.

As described above, a layer of the powder material is melted, to form a sintered layer. The thickness of the sintered layer may be appropriately changed depending on the object production process. When there are a plurality of sintered layers, the average thickness of these layers is preferably 10 micrometers or greater, more preferably 50 micrometers or greater, and yet more preferably 100 micrometers or greater.

<Other steps and other units>

Examples of the other steps include a sintering step and a controlling step.

Examples of the other units include a sintering unit and a controlling unit.

A three-dimensional object producing apparatus configured to produce an object using the resin powder will be described with reference to FIG. 3.

The three-dimensional object producing apparatus 1 illustrated in FIG. 3 includes a supplying tank 11, a roller 12, a laser scanning space 13, an electromagnetic irradiation source 18, a reflecting mirror 19, and heaters 11H and 13H.

The supplying tank 11 is configured to contain a resin powder P as a material for producing an object, and is

an example of a storing unit.

The roller 12 is configured to supply the resin powder P stored in the supplying tank 11 to the laser scanning space 13, and is an example of a supplying unit. The roller 12 is formed of, for example, stainless steel (SUS).

The laser scanning space 13 is a space scanned with laser L serving as an electromagnetic ray. The roller 12 forms a layer of the powder material having a predetermined thickness.

The electromagnetic irradiation source 18 is configured to emit the laser L.

The reflecting mirror 19 is configured to reflect the laser L emitted by the electromagnetic irradiation source 18 to a predetermined position in the laser scanning space 13. The electromagnetic irradiation source 18 and the reflecting mirror are an example of a laser irradiation unit. The reflecting surface of the reflecting mirror 19 is configured to move based on 3D data while the electromagnetic irradiation source 18 is emitting the laser L.

3D data represents the shape of each cross-section obtained when a 3D model is sliced at predetermined intervals. With the angle of reflecting the laser L changed based on the 3D data, the laser L is selectively emitted to a predetermined layer indicated by the 3D data in the laser scanning space 13. Being irradiated with the laser L, the resin powder at the irradiated position is melted and sintered, to form an object forming layer. That is, the electromagnetic irradiation source 18 functions as a layer forming unit configured to form each layer of an object with the resin powder P. The heaters 11H and 13H may heat the resin powder P stored in the supplying tank 11 and the laser scanning space 13 respectively.

The supplying tank 11 and the laser scanning space 13 of the three-dimensional object producing apparatus 1 are provided with pistons 11P and 13P. The pistons 11P and 13P are configured to move the object supplying tank 11 and the laser scanning space 13 upward or downward in the object layer lamination direction when formation of a layer is completed. This makes it possible to supply new resin powder P to be used for forming a new layer from the supplying tank 11 to the laser scanning space 13.

The three-dimensional object producing apparatus 1 may be configured to selectively melt the resin powder P by changing the position to be irradiated with the laser by means of the reflecting mirror 19. In addition, the resin powder of the present disclosure can be applied to various object producing apparatuses of, for example, a selective mask sintering (SMS) type and a high speed sintering (HSS) type. In the SMS method, for example, part of the resin powder is masked with a blocking mask, and when an electromagnetic ray is emitted, unmasked parts are irradiated with the electromagnetic ray such as an infrared ray, to selectively melt the resin powder and produce an object.

When employing the SMS method, it is preferable that the resin powder P contain one or more kinds of, for example, a heat absorbent or a dark color substance for enhancing infrared absorbability.

As the heat absorbent or the dark color substance, it is preferable to use, for example, carbon fiber, carbon black, carbon nanotube, and cellulose nanofiber. In the HSS method, a solution for forming an object containing a radiant energy absorbent is discharged onto an object forming region of a layer of the powder material, and radiant energy is applied, to fuse powder particles containing resin particles with each other.

FIG. 4 is a flowchart illustrating an example operation of the three-dimensional object producing apparatus. Three-dimensional object production by the three-dimensional object producing apparatus 1 will be described below with reference to FIG. 3.

In the step S1, a material for producing an object is supplied (a supplying step). Specifically, as the material for producing an object, the resin powder P in the supplying tank 11 is supplied to the laser scanning space 13, and is flattened with the roller 12 driven. As a result, a layer of the powder material having a thickness T for one layer is formed.

Next, in the step S2, the material for producing an object is irradiated with the laser (a laser irradiating step). Based on data of a predetermined layer included in object formation data, the electromagnetic irradiation source 18 emits the laser with the reflecting surface of the reflecting mirror 19 moved. In response to laser irradiation, the resin powder P at the position corresponding to the pixel indicated by the data of the predetermined layer within the layer of the powder material is melted. The resin melted by laser irradiation is cured, to form an object forming layer for one layer.

Next, in the step S3, the three-dimensional object producing apparatus 1 determines whether all layers have been produced. The object formation data includes data of a plurality of layers. The three-dimensional object producing apparatus determines whether data of all layers have been used for production of the object. When all layers have been produced, object production is terminated. When all layers have not been produced, the supplying tank 11 and the laser scanning space 13 are moved upward or downward in the object layer lamination direction.

Then, the flow is returned to the step S1. Through repetition of the supplying step (step S1) and the irradiating step (step S2), object forming layers are laminated, to produce a three-dimensional object. In the step S1 and the step S2, the resin powder P stored in the supplying tank 11 and the laser scanning space 13 may be heated with the heaters 11H and 13H respectively.

(Three-dimensional object)

A three-dimensional object produced with the thermoplastic resin powder of the present disclosure is not particularly limited and may be appropriately selected depending on the intended purpose. Examples of the three-dimensional object include prototypes of electronic equipment parts and automobile parts, trial products for strength test, and small-lot products used as dress-up tools for aerospace or automobile industries. PBF products can endure use as practically usable products, because PBF products are expected to have an excellent strength compared with products of other methods such as fused filament fabrication (FFF) methods and inkjet methods.

The production speed cannot match the speed of mass production by, for example, injection molding. However, the needed output volume of products can be achieved by, for example, mass production of small parts in planar shapes. The three-dimensional object producing method by a PBF method used in the present disclosure does not need a molding die for, for example, injection molding. Therefore, overwhelming cost saving and delivery time saving can be achieved in trial production and prototype production.

[Second embodiment]

(Resin powder)

The resin powder of the present disclosure contains resin particles and resin fine particles having a number-based primary particle diameter of 1.50 micrometers or less. The resin powder further contains other components as needed.

Applications of the resin powder of the present disclosure are not particularly limited and may be appropriately selected depending on the intended purpose. For example, the resin powder may be used as particles to be used in applications such as surface modifiers, spacers, lubricants, paints, grindstones, additives, secondary battery separators, foods, cosmetics, clothes, automobiles, precision equipment, semiconductors, aerospace, medical care, substitution materials for metals, and three-dimensional object production. A resin powder for producing a three-dimensional object will be described below as an example of the resin powder.

The present disclosure has an object to provide a resin powder capable of producing a high-density, high-quality three-dimensional object having a high dimensional stability and a high surface smoothness.

The present disclosure can provide a resin powder capable of producing a high-density, high-quality three-dimensional object having a high dimensional stability and a high surface smoothness.

(Resin powder for producing three-dimensional object)

A resin powder for producing a three-dimensional object of the present disclosure contains resin particles and resin fine particles having a number-based primary particle diameter of 1.50 micrometers or less, and further contains other components as needed.

The resin powder for producing a three-dimensional object of the present disclosure may be particularly non-limitedly used in any three-dimensional object producing method so long as the three-dimensional object producing method is intended to use a resin powder, and the three-dimensional object producing method may be appropriately selected depending on the intended purpose. Because the resin powder for producing a three-dimensional object of the present disclosure has a high fluidity and an excellent antistatic effect, the resin powder for producing a three-dimensional object is particularly useful for three-dimensional object production employing powder bed fusion (PBF)-type laser sintering methods, such as selective laser sintering (SLS) methods, selective mask sintering (SMS) methods, and high speed sintering (HSS) methods.

As a result of earnest studies, the present inventors have found that stable production of high-density, high-quality three-dimensional objects having a high dimensional stability and a high surface smoothness is related with the fluidity and the chargeability of a resin powder for producing a three-dimensional object. Coating the surface of resin particles with resin fine particles having a number-based primary particle diameter of 1.50 micrometers or less makes it possible to prevent occurrence of internal voids while maintaining surface smoothness during lamination of layers, and to obtain a high-density, high-quality three-dimensional object having a high dimensional stability and a high surface smoothness.

<Resin particles>

The shape of the resin particles is not particularly limited and may be appropriately selected depending on intended purpose. A spherical shape is preferable, and a true-spherical shape is more preferable.

A spherical shape refers to a shape having an average sphericity of 0.8 or greater but 1.0 or less.

With addition of a conductive substance in the resin particles in order for the conductive substance to prevent charging of the resin fine particles, it is possible to produce three-dimensional objects stably without suspension of the production of the three-dimensional objects.

<Resin fine particles>

The shape of the resin fine particles is not particularly limited and may be appropriately selected depending on the intended purpose. A spherical shape is preferable, and a true-spherical shape is more preferable.
A spherical shape refers to a shape having an average sphericity of 0.8 or greater but 1.0 or less.
The number-based primary particle diameter of the resin fine particles is 1.50 micrometers or less, preferably 1.30 micrometers or less, more preferably 1.25 micrometers or less, and yet more preferably 1.20 micrometers or less. Further, the number-based primary particle diameter of the resin fine particles is preferably 0.10 micrometers or greater, more preferably 0.20 micrometers or greater, and yet more preferably 0.30 micrometers or greater, particularly preferably 0.35 micrometers or greater, and the most preferably 0.40 micrometers or greater.
The number-based primary particle diameter of the resin fine particles can be measured by observation with, for example, a particle size distribution image analyzer or a scanning electron microscope.
Use of the resin fine particles having a number-based primary particle diameter of 1.50 micrometers or less makes it possible to impart a high fluidity to the resin powder for producing a three-dimensional object and to obtain a high-density, high-strength three-dimensional object having a high dimensional stability and a high surface smoothness.
It is preferable that the resin fine particles have positive chargeability. Most resin particles have negative chargeability over the surface. Hence, resin fine particles having positive chargeability have a high coating efficiency over the surface of the resin powder for producing a three-dimensional object.
The resin fine particles may be an appropriately synthesized product or a commercially available product. For example, melamine-based compounds, acrylic-based compounds, methyl methacrylate-based compounds, and styrene-based compounds are used as the resin fine particles. Among these compounds, melamine-based compounds and acrylic-based compounds are preferable.
Examples of the commercially available product include: EPOSTER S, EPOSTER S6, and EPOSTER S12 (available from Nippon Shokubai Co., Ltd.) as melamine-formaldehyde condensates; non-crosslinked acrylic particles CHEMISNOW MP-1451 and crosslinked acrylic monodispersed particles CHEMISNOW MX-150 (available from Soken Chemical & Engineering Co., Ltd.) as acrylic-based compounds; and TECHPOLYMER (available from Sekisui Plastics Co., Ltd.) as methyl methacrylate-based compounds and styrene-based compounds.
The content of the resin fine particles is preferably 0.05% by mass or greater but 10.0% by mass or less and more preferably 0.1% by mass or greater but 1.0% by mass or less. When the content of the resin fine particles is 0.05% by mass or greater, a fluidity imparting effect is sufficiently obtained. When the content of the resin fine particles is 10.0% by mass or less, a coating effect over the surface of the resin powder for producing a three-dimensionanl object is appropriately obtained.
In order to improve fluidity, inorganic fine particles may be added in a content of 0.05% by mass or less. Inorganic fine particles in a content greater than 0.05% by mass are not preferable because the strength of a three-dimensional object may be affected.
The inorganic fine particles may be an appropriately synthesized product or a commercially available product. Examples of the commercially available product include AEROSIL RA200H (available from Nippon Aerosil Co., Ltd.).

<Resin particles>

The resin particles contain a resin and a conductive substance, and further contain other components as needed. The resin is not particularly limited and may be appropriately selected depending on the intended purpose. A thermoplastic resin is particularly preferable.

<<Thermoplastic resin>>

It is preferable that the thermoplastic resin have crystallinity. A thermoplastic resin having crystallinity can also be referred to as a crystalline resin having thermoplasticity (or a crystalline thermoplastic resin). A thermoplastic resin having crystallinity has a detectable melting point peak when measured according to JIS L7121 (Testing Methods for Transition Temperatures of Plastics: ISO 3146).
The thermoplastic resin having crystallinity may be crystallinity-controlled. Crystallinity control of a crystalline thermoplastic resin refers to control of crystal size and crystal orientation by such methods as thermal treatment, drawing, external stimulation.
The method for crystallinity control is not particularly limited and may be appropriately changed. Examples of the method include a method of performing annealing treatment for heating the resin powder for producing a three-dimensional object at a temperature higher than or equal to the glass transition point of each resin in order to increase crystallinity, a method of applying ultrasonic waves in order to increase crystallinity, and a method of forming an orientation-increased, or crystallinity-increased resin, which has been obtained through a step of, for example, growing crystallinity

by external electric field application, or through drawing, into a powder by, for example, crushing, to obtain a high-crystallinity resin powder for producing a three-dimensional object.

The extent of crystallization by crystallization by the methods described above is referred to as degree of crystallinity (crystallization rate). Typically, the degree of crystallinity is reset through heating and melting at higher than or equal to the melting point. Therefore, in order to examine by what degree the degree of crystallinity has increased, the resin is heated to higher than or equal to the melting point and sufficiently melted, and subsequently cooled and heated again. This makes it possible to measure a degree of crystallinity close to a crystallinity-uncontrolled state, and evaluate the degree of crystallinity based on the degree of crystallinity close to the crystallinity-uncontrolled state.

From this viewpoint, it is preferable that the following results be obtained in differential scanning calorimetry (DSC) when measurement according to JIS K7121 (Testing Methods for Transition Temperatures of Plastics: ISO 3146) is performed. That is, in the DSC measurement, it is preferable that the degree of crystallinity in the second run be higher when the degree of crystallinity (degree of crystallinity in the first run) obtained from the amount of energy of an endothermic peak attributable to temperature elevation to a temperature that is 30 degrees C higher than the melting point (first temperature elevation) is compared with the degree of crystallinity (degree of crystallinity in the second run) obtained through subsequent cooling to lower than or equal to room temperature and another temperature elevation to the temperature that is 30 degrees C higher than the melting point (second temperature elevation). It is preferable that the degree of crystallinity in the second run be as high as possible in terms of obtaining as high a dimensional stability as possible.

Examples of the thermoplastic resin having crystallinity include polyolefins, polyamides, polyesters, polyether ketone, polyaryl ketone, polyphenylene sulfides, liquid crystal polymers (LCP), polyacetals, polyimides, and fluororesins. Any of these polymers or combination of polymers may be used in an adequate amount, and one or more kinds is/are used. Among these thermoplastic resins, polyolefins are preferable, and polypropylene is particularly preferable.

Examples of polyolefins include polyethylene (PE) and polypropylene (PP).

Examples of polyamides include: polyamide 410 (PA410), polyamide 6 (PA6), polyamide 66 (PA66), polyamide 610 (PA610), polyamide 612 (PA612), polyamide 11 (PA11), polyamide 12 (PA12); and semiaromatic polyamide 4T (PA4T), polyamide MXD6 (PAMXD6), polyamide 6T (PA6T), polyamide 9T (PA9T), and polyamide 10T (PA10T). PA9T is also referred to as polynonamethylene terephthalamide, formed of diamine containing 9 carbon atoms and a terephthalic acid monomer, and referred to as semiaromatic series because the carboxylic acid side is typically aromatic. Examples of polyamides also include aramid produced from p-phenylenediamine and a terephthalic acid monomer, as examples of wholly aromatic series that are also aromatic at the diamine side.

Examples of polyesters include polyethylene terephthalate (PET), polybutadiene terephthalate (PBT), and polylactic acid (PLA). Examples of polyester also include polyesters containing aromatic series that partially contain terephthalic acid or isophthalic acid in order to impart heat resistance.

Examples of polyethers include polyether ether ketone (PEEK), polyether ketone (PEK), polyether ketone (PEKK), polyaryl ether ketone (PAEK), polyether ether ketone ketone (PEEKK), and polyether ketone ether ketone ketone (PEKEKK).

In addition, the thermoplastic resin having crystallinity may be crystalline polymers and may be, for example, polyacetals, polyimides, and polyether sulfone.

The thermoplastic resin may be a thermoplastic resin having two melting point peaks such as PA9T. The thermoplastic resin having two melting point peaks completely melts when the temperature becomes higher than or equal to the higher melting point peak. It is preferable that the thermoplastic resin powder contain one or more kinds of thermoplastic resins having a melting point of 100 degrees C or higher.

«Conductive substance»

Conductive substances are typically classified into two types, i.e., a type (surface hydrophilizing type) that exerts an antistatic effect through floating of a polar group toward the surface based on the balance between surfactant property-applied compatibility with a matrix and a surface migration property, and a type (conductivity inducing type) to which a polymeric compound having a polar side chain mixable with the target plastic is introduced in order to attempt reformation of electric properties through polymer blending.

Examples of the surface hydrophilizing-type conductive substance that exerts an antistatic effect through floating of a polar group toward the surface based on the balance between surfactant property-applied compatibility with a matrix and a surface migration property include fatty acid esters, alkyl sulfonates, and alkyl ammonium salts.

Examples of the conductivity inducing-type conductive substance to which a polymeric compound having a polar side chain mixable with the target plastic is introduced in order to attempt reformation of electric properties through polymer blending include boron compounds, carbon black, and conductive polymers.

Of these types, the conductivity inducing type is preferable as the conductive substance because the antistatic effect stably lasts with addition in a small amount.

A conductivity inducing-type conductive substance refers to a substance that, when added in an insulator material, induces a charge transfer-type bond inside the insulator material, to bring the insulator material close to a semiconductor region. Because the conductivity inducing mechanism is formed as an internal structure, the conductive effect can be retained stably for a long term.

The conductivity inducing-type conductive substance may be a commercially available product, examples of which include BIOMICELLE BN-105 (available from Boron Laboratory Co., Ltd.) and PELECTRON HS (available from Sanyo Chemical Industries, Ltd.).

The content of the conductive substance is preferably 0.05% by mass or greater but 10% by mass or less and more preferably 0.5% by mass or greater but 5% by mass or less relative to the total amount of the resin particles. When the content of the conductive substance is 0.05% by mass or greater, a sufficient antistatic effect is obtained. When the content of the conductive substance is 10% by mass or less, physical properties of the resin powder for producing a three-dimensional object are stably obtained without being spoiled.

«Other components»

As the other components, for example, additives such as a filler formed of an inorganic material or an organic material, a flame retardant, a plasticizer, a thermally stable additive, and a crystal nucleating agent, and a non-crystalline resin may be added. These components may be blended with polymer particles or may be absorbed on polymer particles.

A fluidizer may also be added in addition to the components described above. The addition amount of the fluidizer is preferably 5% by mass or greater but 90% by mass or less relative to the resin powder for producing a three-dimensional object.

Examples of the fluidizer include glass beads and aluminum balls.

It is preferable that the resin powder for producing a three-dimensional object be dry adequately. The resin powder for producing a three-dimensional object may be dried with a vacuum drier or silica gel before use.

<Method for producing resin powder for producing three-dimensional object>

The method for producing the resin powder for producing a three-dimensional object is not particularly limited and may be appropriately selected. Examples of the method include a freeze-crushing method of freezing the resin and crushing the resultant. Other examples of the method include a method of melting and mixing two or more kinds of incompatible resins using a kneader to produce a sea-island structure and washing and removing the resin constituting the sea, to produce particles (hereinafter referred to as "melting/kneading method"), a method of drawing a resin into a fibrous shape using an extruder and cutting the resultant (hereinafter may be referred to as "fiber cutting method"), and a polymerization method.

The freeze-crushing method may be appropriately changed. Using crushing equipment at room temperature, the resin in the form of pellets is crushed into a resin powder, and any powder particles having particle diameters other than the intended particle diameter are subjected to classification such as filtration through a filter. For classification, for example, a mesh with an appropriately selected mesh size is used, to remove coarse particles or fine particles. During crushing, it is possible to adjust the particle diameter, with appropriate adjustment of the intended particle diameter of crushing.

It is preferable to perform crushing at a low temperature lower than or equal to 0 degrees C (lower than equal to the brittle fracture temperature of the resin), more preferably at -25 degrees C or lower, and yet more preferably at an ultralow temperature lower than or equal to -100 degrees C. Crushing is performed taking advantage of the brittleness of the resin at a low temperature.

The crushing equipment used for crushing is not particularly limited and may be appropriately changed. Examples of the crushing equipment include a pinned mill, a counter jet mill, and a baffle plate impact crusher.

The crystallinity control treatment described above may be performed before crushing or after crushing.

After crushing, it is preferable to perform a conglobation step to round off square corners. Examples of conglobation include use of a solvent that dissolves the resin, and conglobation using, for example, a stirrer while applying heat.

The melting/kneading method is not particularly limited, and resins to be used may be appropriately selected. For example, combination of a hydrophilic resin and a hydrophobic resin is widely used because the hydrophilic resin is easy to wash and remove.

The fiber cutting method is not particularly limited and may be appropriately selected depending on the intended purpose. For example, the fiber cutting method can be carried out by drawing the resin in the form of, for example, pellets by some times to adjust the size to some tens of micrometers or greater but some hundreds of micrometers or less, and subsequently subjecting the obtained fibers to, for example, laser cutting or blade cutting into some micrometers or greater but some hundreds of micrometers or less.

The volume average particle diameter of the resin powder for producing a three-dimensional object is preferably

30 micrometers or greater but 100 micrometers or less and more preferably 50 micrometers or greater but 70 micrometers or less. When the volume average particle diameter of the resin powder for producing a three-dimensional object is 30 micrometers or greater but 100 micrometers or less, a high-density, high-quality three-dimensional object having a high dimensional stability and a high surface smoothness can be produced.

If there are many particles having a volume average particle diameter of greater than 100 micrometers when the thickness of one layer to be laminated in a PBF-type apparatus is about 100 micrometers, the surface of a layer laminated may be roughened or clogging may occur. In order to improve the dimensional accuracy of a three-dimensional object, it is preferable that the volume average particle diameter be as small as possible. On the other hand, when the volume average particle diameter is less than 30 micrometers, the resin powder for producing a three-dimensional object has a low bulk density and a three-dimensional object is likely to have a low density.

Examples of the method for measuring the volume average particle diameter of the resin powder for producing a three-dimensional object include a method of measuring the volume average particle diameter based on the particle refractive index of each resin powder using MICROTRAC MT3300EXII available from Nikkiso Co., Ltd.

The resin powder for producing a three-dimensional object of the present disclosure provides a laminated layer with a good surface smoothness. Therefore, a three-dimensional object to be obtained also has a good surface smoothness. Hence, a high-quality three-dimensional object having a high dimensional stability and a high surface smoothness can be obtained. Moreover, the resin powder for producing a three-dimensional object of the present disclosure can be suppressed from being uneven in the resin powder compactness and can provide a high-quality three-dimensional object with an improved density.

The resin powder for producing a three-dimensional object can be used as a material for laser sintering, and can be used in, for example, SLS methods, SMS methods, and HSS method. In these methods, the resin powder for producing a three-dimensional object can stably provide a high-quality three-dimensional object having a high dimensional stability and a high surface smoothness.

(Three-dimensional object producing method and three-dimensional object producing apparatus)

A three-dimensional object producing method of the present disclosure includes a step of forming a powder material layer formed of a resin powder for producing a three-dimensional object (hereinafter may also be referred to as "powder material layer forming step") and a step of melting the powder material layer (hereinafter may also be referred to as "melting step"), and repeats these steps to produce a three-dimensional object.

A three-dimensional object producing apparatus of the present disclosure includes a powder material layer forming unit configured to form a powder material layer formed of a resin powder for producing a three-dimensional object and a melting unit configured to melt the powder material layer, and further includes other units as needed.

<Powder material layer forming step and powder material layer forming unit>

The powder material layer forming step is a step of forming a powder material layer formed of a resin powder for producing a three-dimensional object, and is performed by the powder material layer forming unit.

It is preferable to form the powder material layer over a support.

The support is not particularly limited and may be appropriately selected depending on the intended purpose so long as the resin powder for producing a three-dimensional object can be placed over the support. Examples of the support include a table having a placing surface over which the resin powder for producing a three-dimensional object is placed, and a base plate of an apparatus illustrated in FIG. 1 of Japanese Unexamined Patent Application Publication No. 2000-328106.

The surface of the support, i.e., the placing surface over which the resin powder for producing a three-dimensional object is placed may be, for example, a smooth surface, a coarse surface, a flat surface, or a curved surface. It is preferable that the placing surface have a coefficient of thermal expansion different from a three-dimensional object produced through heating and melting and subsequent cooling and solidification of organic materials in the resin powder for producing a three-dimensional object, because the three-dimensional object can be easily removed from such a placing surface.

The method for placing the resin powder for producing a three-dimensional object over the support is not particularly limited and may be appropriately selected depending on the intended purpose. Examples of a method for placing the resin powder for producing a three-dimensional object in the form of a thin layer include a method using, for example, a known counter rotating mechanism (counter roller) employed in a selective laser sintering method described in Japanese Patent No. 3607300, a method for spreading the resin powder for producing a three-dimensional object to have a form of a thin layer with such a member as a brush, a roller, and a blade, a method for pressing the surface of the resin powder for producing a three-dimensional object with a pressing member to spread the resin powder for producing a three-dimensional object to have a form of a thin layer, and a method using a known powder laminated

object manufacturing apparatus.

Placing the resin powder for producing a three-dimensional object over the support in the form of a thin layer using, for example, the counter rotating mechanism (counter roller), the brush, roller, or blade, and the pressing member may be performed in, for example, the following manner.

That is, with, for example, the counter rotating mechanism (counter roller), the brush, the roller, or the blade, or the pressing member, the resin powder for producing a three-dimensional object is placed over the support that is disposed within an outer frame (may also be referred to as, for example, "mold", "hollow cylinder", or "tubular structure") in a manner that the support can lift upward and downward while sliding against the inner wall of the outer frame. When the support used is a support that can lift upward and downward within the outer frame, the support is disposed at a position slightly lower than the upper-end opening of the outer frame, i.e. at a position lower by an amount corresponding to the thickness of a powder material layer, and then the resin powder for producing a three-dimensional object is placed over the support. In this way, the resin powder for producing a three-dimensional object can be placed over the support in the form of a thin layer.

The thickness of a powder material layer is not particularly limited, and may be appropriately selected depending on the intended purpose. The average thickness per layer is preferably 1 micrometer or greater but 500 micrometers or less and more preferably 10 micrometers or greater but 200 micrometers or less.

<Melting step and melting unit>

The step of melting the powder material layer (melting step) is not particularly limited and may be appropriately selected depending on the intended purpose. Examples of the method for performing the step include an electromagnetic irradiation method, and a method using an inhibitor or an absorbent. Among these methods, electromagnetic irradiation is preferable, and selective electromagnetic irradiation is more preferable.

Electromagnetic irradiation is not particularly limited and may be appropriately selected depending on the intended purpose. Examples of electromagnetic irradiation include a laser light source, an infrared irradiation source, a microwave generator, a radiant heater, and a LED lamp. These devices may be combined. When using a laser light source, both of the followings are available: selective direct laser irradiation, and planar laser irradiation using a mask. Of these methods, selective direct laser irradiation is preferred.

When using a mask, a three-dimensional object of the present embodiment can be produced employing a selective mask sintering (SMS) technique. A SMS process is described in, for example, United States Patent No. 6,531,086. In a SMS process, a blocking mask is used to selectively block infrared radiation to selectively irradiate a part of a powder material layer.

When employing a SMS process for producing a three-dimensional object using the resin powder for producing a three-dimensional object, it is preferable to add one or more kinds of substances that enhance the infrared absorbing property of the resin powder for producing a three-dimensional object in the resin powder for producing a three-dimensional object.

Examples of the substance that enhances the infrared absorbing property of the resin powder for producing a three-dimensional object include heat absorbents and dark color substances (e.g., carbon fiber, carbon black, carbon nanotube, carbon fiber, and cellulose nanofiber).

As described above, the resin powder for producing a three-dimensional object is suitably used for producing a three-dimensional object by a PFB method. In this case, it is preferable that the three-dimensional object include a plurality of sintered layers laminated with adhering to each other and containing a polymer matrix.

As described above, the powder material layer is melted, to form a sintered layer. The thickness of the sintered layer may be appropriately changed depending on the object production process. When there are a plurality of sintered layers, the average thickness of these layers is preferably 10 micrometers or greater, more preferably 50 micrometers or greater, and yet more preferably 100 micrometers or greater.

<Other steps and other units>

Examples of the other steps include a sintering step and a controlling step.

Examples of the other units include a sintering unit and a controlling unit.

FIG. 5 is a schematic view illustrating an example of the three-dimensional object producing apparatus configured to perform the three-dimensional object producing method of the present disclosure. As illustrated in FIG. 5, the resin powder is stored in a resin powder supplying tank 5, and a roller 4 is used to supply the resin powder to a laser scanning space 6 depending on the amount of use. It is preferable that the temperature of the supplying tank 5 be adjusted by a heater 3. Using a reflecting mirror 2, laser output by an electromagnetic irradiation source 1 is emitted to the laser scanning space 6. The resin powder is sintered by the heat of the laser. In this way, a three-dimensional object can be obtained.

(Three-dimensional object)

A three-dimensional object of the present disclosure is formed of the resin powder for producing a three-dimensional object of the present disclosure. It is preferable that the three-dimensional object be smooth. The surface of the three-dimensional object can be formed to have a sufficient resolution that expresses the least orange peel or lower.
Orange peel typically refers to surface defects present over the surface of a three-dimensional object formed by PBF-type laser sintering, such as an inappropriate coarse surface, voids, or distortion. For example, voids not only spoil the appearance but also significantly affect the mechanical strength.
Further, advantageously, the three-dimensional object does not exhibit process characteristics such as warpage, distortion, and smoke emission that are due to a phase change that may occur during cooling performed during sintering or after sintering.

<Applications>

Using the resin powder for producing a three-dimensional object, it is possible to produce articles used for applications such as prototypes of electronic equipment parts, trial products for strength test, and small-lot products used as dress-up tools for aerospace or automobile industries.
PBF products such as SLS products, SMS products, and HSS products are expected to endure use as practically usable products, because these products are expected to have an excellent strength compared with products of fused filament fabrication (FFF) methods and inkjet methods. The production speed is considered lower than the speed of mass production by, for example, injection molding. However, the needed output volume of products can be achieved by, for example, mass production of small parts in planar shapes. The PBF method does not need a molding die for, for example, injection molding. Therefore, overwhelming cost saving and delivery time saving can be achieved in trial production and prototype production.

EXAMPLES

The present disclosure will be described below by way of Examples. The present disclosure should not be construed as being limited to these Examples.

[Examples of First embodiment]

(Example 1)

With respect to a polypropylene (PP) resin (product name: PRIME POLYPRO J704UG, obtained from Prime Polymer Co., Ltd., with a melting point of 160 degrees C) (99 parts by mass), a masterbatch (1 part by mass) containing PP of the same grade and a heat-resistant antistatic agent BIOMICELLE BN105 (obtained from Boron Laboratory Co., Ltd.) in an amount ten times greater than the PP was used. After the masterbatch materials were mixed uniformly, the resultant was added to the polypropylene resin. The resultant was fed to a biaxial extruder (equipment name: 2D25S, obtained from Toyo Seiki Seisaku-sho Ltd.), drawn by 5 times through a circular nozzle opening of the biaxial extruder, and wound up, to form a resin fiber having a diameter of 50 micrometers. Subsequently, the formed resin fiber was cut into a size for achieving the intended particle size, using an automatic cutter (equipment name: NZI-0606, obtained from Ogino Seiki Co., Ltd.).
In Example 1, the resin fiber was cut into circular cylindrical bodies having a height of 55 micrometers in a manner that the 50% cumulative volume-based particle diameter ($D_{50}$) would be 80 micrometers, to obtain a resin powder. In the following Examples, in order to adjust the 50% cumulative volume-based particle diameter ($D_{50}$) to a target value, a result obtained by dividing the cutting width, i.e., the height of the circular cylindrical bodies by $\sqrt{2}$, which was the diagonal line, was used.
Next, in order to melt the surface of the obtained resin powder by mechanical friction, the resin powder was processed with a Q mixer (a mechanohybrid MH type, obtained from Nippon Coke & Engineering Co., Ltd.) at a rotation speed of 1,000 rpm for 20 minutes, to obtain a thermoplastic resin powder.
Various properties of the obtained thermoplastic resin powder were evaluated in the manners described below. The results are presented in Table 1-1 and Table 1-2.

<Measurement of melting point of thermoplastic resin powder>

The melting point of the obtained thermoplastic resin powder was measured according to ISO 3146, using a differential scanning calorimeter (DSC-60A, obtained from Shimadzu Corporation). Specifically, the resin particles were

subjected to DSC measurement at a temperature elevation temperature gradient of 10 degrees C/min, the temperature at the top of an obtained endothermic peak or the temperature at the top of a melting point peak was employed as the melting point. When the resin particles were found to have a plurality of melting points, the higher melting point was employed.

<Measurement of density of thermoplastic resin powder>

The true density of the thermoplastic resin powder was calculated based on the volume of a sample containing the resin powder, obtained by varying the volume and the pressure of a gas (He gas) at a constant temperature using a dry automatic densimeter (instrument name: ACCUPYC 1330, obtained from Shimadzu Corporation) employing a gas phase substitution method, and based on the mass of the sample measured.

<Shape of thermoplastic resin powder, and diameter of bottom surface × height>

The shape of the resin particles of the obtained thermoplastic resin powder was observed with a scanning electron microscope (equipment name: JSM-7800FPRIME, obtained from JEOL Ltd.). Furthermore, in the case of a prismatic shape and a circular cylindrical shape, the diameter of the bottom surface or the length of a diagonal line, and the height were measured.

<50% cumulative volume-based particle diameter ($D_{50}$) and ratio (Mv/Mn)>

The 50% cumulative volume-based particle diameter ($D_{50}$) of the thermoplastic resin powder was measured using a particle size distribution measuring instrument (obtained from Microtracbel Corporation, MICROTRAC MT3300EXII). The volume average particle diameter Mv and the number average particle diameter Mn were also measured using the same particle size distribution measuring instrument, to calculate the ratio (Mv/Mn).

<Thermal decomposition measurement>

Tg-DTA measurement was performed according to ISO 7111-1987, using a differential thermal balance (THERMO PLUS EVO TG-DTA, obtained from Rigaku Corporation) under a nitrogen atmosphere. The temperature at which a 5% mass reduction occurred was measured as a 5% mass reduction temperature (Td5).
Furthermore, using the differential thermal balance mentioned above, a ratio of mass reduction at 4 hours later at a temperature that was 10 degrees C lower than the melting point of the thermoplastic resin powder was obtained.

<Triboelectric charging method>

(1) Room temperature (25 degrees C): Using a SLS-type object producing apparatus (obtained from Ricoh Company, Ltd., AM S5500P) in which the temperatures of a supplying tank and an object forming tank were set to room temperature (25 degrees C), a stainless steel recoater was rotated at 500 m/minute to supply the thermoplastic resin powder from the supplying tank to the object forming tank for 10 minutes after the layer lamination pitch was set to 100 micrometers. Subsequently, the surface potential at 2mm above the surface of a powder layer in the object forming tank was measured using a surface electrometer (MODEL 344, obtained from Trek Japan), and evaluated according to the criteria described below.
(2) High temperature (100 degrees C): testing was performed in the same manner as in (1) above, except that unlike in (1), the temperatures of the object forming tank and the supplying tank were set to a temperature that was 10 degrees C lower than the melting point of the thermoplastic resin powder used. The measurement with the surface electrometer was performed when the temperatures of the supplying tank and the object forming tank became 100 degrees C, and the surface potential was evaluated according to the criteria described below.

[Evaluation criteria]

C: -100 V or lower, or +100 V or higher
B: higher than -100 V but lower than +100 V
A: within ±10 V

<Production of three-dimensional object>

Using the obtained thermoplastic resin powder and a SLS-type object producing apparatus (obtained from Ricoh Company, Ltd., AM S5500P), a three-dimensional object was produced according to a SLS method. As set conditions, the average layer thickness was 0.1 mm, the laser output power was set to 10 watt or higher but 150 watt or lower, the laser scanning space was 0.1 mm, and the part bed temperature was 3 degrees C lower than the melting point.

<Pass or fail of three-dimensional object production>

Regarding the three-dimensional object obtained in Production of three-dimensional object described above, pass or fail of three-dimensional object production was evaluated according to the criteria described below.

[Evaluation criteria]

B: A shape was obtained without distortion.
C: An object was roughened or largely pored, because the powder surface was roughened to make object production infeasible, or the object was dragged to make it impossible to continue object production, or the powder fell from the recoater.

<Amount of adhesion by recoating through object production>

The recoater bar was removed after production of the three-dimensional object was performed, the adhering thermoplastic resin powder was scraped off, and the weight of the adhering thermoplastic resin powder was measured, to obtain the amount of adhesion and evaluate the amount of adhesion according to the criteria described below.

[Evaluation criteria]

C: The amount of adhesion was 1 g or greater.
B: The amount of adhesion was less than 1 g.
A: The amount of adhesion was 0.1 g or less.

(Example 2)

A thermoplastic resin powder was obtained in the same manner as in Example 1, except that unlike in Example 1, a hindered phenol-based antioxidant (product name: AO-330, 1,3,5-tris(3,5-di-tert-butyl-4-hydroxyphenylmethyl)-2,4,6-trimethylbenzene, obtained from ADEKA Corporation) (0.1 parts by mass), and bis(2,6-di-tert-butyl-4-methylphenyl)pentaerythritol diphosphite (ADEKASTAB PEP-36, obtained from ADEKA Corporation), which was a phosphorus-based degradation inhibitor (0.2 parts by mass) were added.

(Example 3)

A thermoplastic resin powder was obtained in the same manner as in Example 1, except that unlike in Example 1, the content of BIOMICELLE BN105 (obtained from Boron Laboratory Co., Ltd.), which was the heat-resistant antistatic agent, was changed from 1 part by mass to 0.2 parts by mass.

(Example 4)

A thermoplastic resin powder was obtained in the same manner as in Example 2, except that unlike in Example 2, the content of BIOMICELLE BN105 (obtained from Boron Laboratory Co., Ltd.), which was the heat-resistant antistatic agent, was changed from 1 part by mass to 4.5 parts by mass, the content of the hindered phenol-based antioxidant (product name: AO-330, obtained from ADEKA Corporation) was changed to 0.2 parts by mass, and the content of the phosphorus-based degradation inhibitor (ADEKASTAB PEP-36, obtained from ADEKA Corporation) was changed to 0.4 parts by mass.

(Example 5)

A thermoplastic resin powder was obtained in the same manner as in Example 4, except that unlike in Example 4, the shape of the discharge opening of the biaxial extruded was changed from a circular shape to a quadrangular shape, the fiber diameter was changed to 127 micrometers, the cutting width was changed to 127 micrometers, the hindered phenol-based antioxidant (product name: AO-330, obtained from ADEKA Corporation) was not added, and the content of the phosphorus-based degradation inhibitor (ADEKASTAB PEP-36, obtained from ADEKA Corporation) was set to 0.4 parts by mass.

(Example 6)

Unlike in Example 1, the kind of the resin was changed to PP random (J-721GR, obtained from Prime Polymer Co., Ltd.), the heat-resistant antistatic agent was changed to polyoxyalkylene alkyl ester (product name: EMAL 20C, obtained from Kao Corporation) (4.8 parts by mass), and a resin fiber obtained to have a fiber diameter of 20 micrometers was then subjected to a freeze-crushing method at -100 degrees C, to obtain a resin powder.
In order to melt the surface of the obtained resin powder by mechanical friction, the obtained resin powder having a true-spherical shape was processed with a Q mixer (a mechanohybrid MH type, obtained from Nippon Coke & Engineering Co., Ltd.) at a rotation speed of 1,000 rpm for 20 minutes, to obtain a thermoplastic resin powder.

(Example 7)

A thermoplastic resin powder was obtained in the same manner as in Example 2, except that unlike in Example 2, the heat-resistant antistatic agent was changed to polyoxyalkylene alkyl ester (product name: EMAL 20C, obtained from Kao Corporation) (4.8 parts by mass).

(Example 8)

A thermoplastic resin powder was obtained in the same manner as in Example 2, except that unlike in Example 2, the heat-resistant antistatic agent was changed to AS301E (obtained from ADEKA Corporation) (1 part by mass).

(Example 9)

A thermoplastic resin powder was obtained in the same manner as in Example 2, except that unlike in Example 2, the kind of the resin was changed to polymethylpentene (obtained from Mitsui Chemicals Inc., DX231).

(Example 10)

A thermoplastic resin powder was obtained in the same manner as in Example 2, except that unlike in Example 2, object production was changed to a process by a HSS method described below.

<HSS method>

Using the powder for producing a three-dimensional object and a HSS-type object producing apparatus (obtained from HP Inc., HP JET FUSION 3D 4200 PRINTER), a three-dimensional object was produced. As set conditions, the average layer thickness was 0.1 mm, the laser scanning space was 0.1 mm, and the part bed temperature was 20 degrees C lower than the melting point.

(Example 11)

A thermoplastic resin powder was obtained in the same manner as in Example 1, except that unlike in Example 1, the content of BIOMICELLE BN105 (obtained from Boron Laboratory Co., Ltd.), which was the heat-resistant antistatic agent, was changed from 1 part by mass to 5.1 parts by mass.

(Example 12)

A thermoplastic resin powder was obtained in the same manner as in Example 1, except that unlike in Example 1, the content of BIOMICELLE BN105 (obtained from Boron Laboratory Co., Ltd.), which was the heat-resistant antistatic agent, was changed from 1 part by mass to 0.01 parts by mass.

(Comparative Example 1)

A thermoplastic resin powder was obtained in the same manner as in Example 6, except that unlike in Example 6, polyoxyalkylene alkyl ester (product name: EMAL 20C, obtained from Kao Corporation), which was the heat-resistant antistatic agent, was not used.

(Comparative Example 2)

A thermoplastic resin powder was obtained in the same manner as in Example 1, except that unlike in Example 1, BIOMICELLE BN105 (obtained from Boron Laboratory Co., Ltd.), which was the heat-resistant antistatic agent, was not used.

(Comparative Example 3)

A thermoplastic resin powder was obtained in the same manner as in Comparative Example 2, except that unlike in Comparative Example 2, the 50% cumulative volume-based particle diameter ($D_{50}$) was changed to 300 micrometers.

(Comparative Example 4)

A thermoplastic resin powder was obtained in the same manner as in Comparative Example 2, except that unlike in Comparative Example 2, the antistatic agent was changed to CATANAC SN (a cationic surfactant, for vinyl chloride) (4.8 parts by mass).

(Comparative Example 5)

A thermoplastic resin powder was obtained in the same manner as in Comparative Example 4, except that unlike in Comparative Example 4, a hindered phenol-based antioxidant (product name: AO-330, 1,3,5-tris(3,5-di-tert-butyl-4-hydroxyphenylmethyl)-2,4,6-trimethylbenzene, obtained from ADEKA Corporation) (0.1 parts by mass), and bis(2,6-di-tert-butyl-4-methylphenyl)pentaerythritol diphosphite (ADEKASTAB PEP-36, obtained from ADEKA Corporation), which was a phosphorus-based degradation inhibitor (0.2 parts by mass) were added.

(Comparative Example 6)

A thermoplastic resin powder was obtained in the same manner as in Comparative Example 5, except that unlike in Comparative Example 5, the antistatic agent was changed to glycerin fatty acid ester (obtained from Riken Vitamin Co., Ltd, RIKEMAL) (4.8 parts by mass).

(Comparative Example 7)

A thermoplastic resin powder was obtained in the same manner as in Example 9, except that unlike in Example 9, BIOMICELLE BN105 (obtained from Boron Laboratory Co., Ltd.), which was the heat-resistant antistatic agent, was not used.

(Comparative Example 8)

A thermoplastic resin powder was obtained in the same manner as in Example 1, except that unlike in Example 1, the content of BIOMICELLE BN105 (obtained from Boron Laboratory Co., Ltd.), which was the heat-resistant antistatic agent, was changed from 1 part by mass to 31 parts by mass.

Table 1-1

| | Kind of resin | (Melting point (°C)/ density (g/$cm^3$)) | Antistatic agent | | 50% cumulative volume-based particle diameter (micrometer) | Mv/Mn | Particle shape | Diameter of bottom surface x height |
|---|---|---|---|---|---|---|---|---|
| | | | Kind | Content (% by mass) | | | | |
| Comp. Ex. 1 | PP random | (135/0.90) | - | - | 20 | 1.2 | True spherical | - |
| Comp. Ex. 2 | PP block | (160/0.90) | - | - | 80 | 1.1 | Circular cylindrical | 1.1 |
| Comp. Ex. 3 | PP block | (160/0.90) | - | - | 300 | 1.9 | Circular cylindrical | 0.4 |
| Ex. 1 | PP block | (160/0.90) | BIOMICELLE (BN105) | 1 | 80 | 1.1 | Circular cylindrical | 1.1 |
| Ex. 2 | PP block | (160/0.90) | BIOMICELLE (BN105) | 1 | 80 | 1.1 | Circular cylindrical | 1.1 |
| Ex. 3 | PP block | (160/0.90) | BIOMICELLE (BN105) | 0.2 | 80 | 1.1 | Circular cylindrical | 1.1 |
| Ex. 4 | PP block | (160/0.90) | BIOMICELLE (BN105) | 4.5 | 120 | 1.1 | Circular cylindrical | 1.8 |
| Ex. 5 | PP block | (160/0.90) | BIOMICELLE (BN105) | 4.5 | 180 | 1.0 | Cubic | 1.0 |
| Ex. 6 | PP random | (135/0.90) | Polyoxyalkylene alkyl ester type | 4.8 | 20 | 1.1 | True spherical | - |
| Ex. 7 | PP random | (135/0.90) | Polyoxyalkylene alkyl ester type | 4.8 | 20 | 1.1 | Circular cylindrical | 0.6 |
| Comp. Ex. 4 | PP block | (160/0.90) | CATANAC SN (cationic surfactant: for vinyl chloride) | 4.8 | 80 | 1.2 | Circular cylindrical | 1.1 |
| Comp. Ex. 5 | PP block | (160/0.90) | CATANAC SN (cationic for vinyl chloride) | 4.8 | 80 | 1.2 | Circular cylindrical | 1.1 |
| Comp. Ex. 6 | PP block | (160/0.90) | glycerin fatty acid ester (Riken, RIKEMAL) | 4.8 | 80 | 1.1 | Circular cylindrical | 1.1 |
| Ex. 8 | PP block | (160/0.90) | AS301E | 1 | 80 | 1.1 | Circular cylindrical | 1.1 |

(continued)

| | Kind of resin | (Melting point (°C)/ density ($g/cm^3$) | Antistatic agent | | 50% cumulative volume-based particle diameter (micrometer) | Mv/Mn | Particle shape | Diameter of bottom surface x height |
|---|---|---|---|---|---|---|---|---|
| | | | Kind | Content (% by mass) | | | | |
| Ex. 9 | Polymethyl pentene | (240/0.83) | BIOMICELLE (BN105) | 1 | 80 | 1.1 | Circular cylindrical | 1.1 |
| Comp. Ex. 7 | Polymethyl pentene | (240/0.83) | - | - | 80 | 1.1 | Circular cylindrical | 1.1 |
| Ex. 10 | PP block | (160/0.90) | BIOMICELLE (BN105) | 1 | 80 | 1.1 | Circular cylindrical | 1.1 |
| Ex. 11 | PP block | (160/0.90) | BIOMICELLE (BN105) | 5.1 | 80 | 1.1 | Circular cylindrical | 1.1 |
| Ex. 12 | PP block | (160/0.90) | BIOMICELLE (BN105) | 0.01 | 80 | 1.1 | Circular cylindrical | 1.1 |
| Comp. Ex. 8 | PP block | (160/0.90) | BIOMICELLE (BN105) | 31 | 80 | 1.1 | Circular cylindrical | 1.1 |

Table 1-2

| | Antioxidant (part by mass) | 5% mass reduction temp. (Td5) (°C) | Ratio of mass reduction through 4-hour heating at [melting point of resin powder-10°C] (% by mass) | Triboelectric charging method | | Pass/fail of 3D production | Amount of adhesion by recoating through 3D production (g) |
|---|---|---|---|---|---|---|---|
| | | | | Room temp. | High temp. | | |
| | (AO/PEP) | (TG-DTA) | | Surface potential [V] | Surface potential [V] | | |
| Comp. Ex. 1 | - | 300 | 0.3 | C 3,000 | C 3,000 | C | 10 (C) |
| Comp. Ex. 2 | - | 300 | 0.1 | C 4,500 | C 4,500 | C | 10 (C) |
| Comp. Ex. 3 | - | 300 | 0.1 | Not recoatable | Not recoatable | C | 30 (C) |
| Ex. 1 | - | 228 | 0.5 | A-10 to 0 | B 20 | B | 0.1 (B) |
| Ex. 2 | 0.1/0.2 | 300 | 0.1 | A-10 to 0 | A -10 to 0 | B | 0 (A) |
| Ex. 3 | 0.1/0.2 | 300 | 0.1 | A-10 to 0 | A -10 to 0 | B | 0 (A) |
| Ex. 4 | 0.2/0.4 | 310 | 0.6 | A-10 to 0 | A -10 to 0 | B | 0 (A) |
| Ex. 5 | 0/0.4 | 300 | 0.5 | A-10 to 0 | A -10 to 0 | B | 0 (A) |
| Ex. 6 | - | 205 | 0.6 | A-10 to 0 | B 40 | B | 0.1 (B) |
| Ex. 7 | 0.1/0.2 | 280 | 0.3 | A-10 to 0 | A -10 to 0 | B | 0 (A) |
| Comp. Ex. 4 | - | 120 | 4.8 | B 10 | C 2,500 | C | 10 (C) |
| Comp. Ex. 5 | 0.1/0.2 | 120 | 4.7 | B 20 | C 2,500 | C | 10 (C) |
| Comp. Ex. 6 | 0.1/0.2 | 140 | 4.8 | B 10 | C 3,500 | C | 10 (C) |
| Ex. 8 | 0.1/0.2 | 228 | 0.5 | A-10 to 0 | B 20 | B | 0.1 (B) |
| Ex. 9 | 0.1/0.2 | 260 | 0.5 | A-10 to 0 | B 20 | B | 0.1 (B) |
| Comp. Ex. 7 | - | 300 | 0.1 | C 2,500 | × 2,500 | C | 10 (C) |
| Ex. 10 | 0.1/0.2 | 300 | 0.1 | A-10 to 0 | A -10 to 0 | B (HSS method) | 0 (A) |
| Ex. 11 | - | 280 | 0.6 | A-10 to 0 | A -10 to 0 | B | 0 (A) |
| Ex. 12 | - | 300 | 0.1 | A-10 to 0 | B 20 | B | 0.1 (B) |
| Comp. Ex. 8 | - | 226 | 31.1 | C 2,500 | C 2,500 | C | 10 (C) |

The abbreviations in Table 1-1 and Table 1-2 stand for the followings.

-Kinds of resins-

*PP random polypropylene resin (PP) (product name: J-721GR, obtained from Prime Polymer Co., Ltd.)

*PP block polypropylene (PP) resin (product name: PRIME POLYPRO J704UG, obtained from Prime Polymer Co., Ltd., with a melting point of 160 degrees C)

*Polymethylpentene: obtained from Mitsui Chemicals Inc., DX231

-Antistatic agent-

* BIOMICELLE BN105: obtained from Boron Laboratory Co., Ltd., a heat-resistant antistatic agent

*Polyoxyalkylene alkyl ester, product name: EMAL 20C, obtained from Kao Corporation, a heat-resistant antistatic agent

*AS301E, obtained from ADEKA Corporation, a heat-resistant antistatic agent

*CATANAC SN, a cationic surfactant, for vinyl chloride, not a heat-resistant antistatic agent

*Glycerin fatty acid ester, obtained from Riken Vitamin Co., Ltd, product name: RIKEMAL, not a heat-resistant antistatic agent

"CATANAC SN (cationic surfactant)", and "glycerin fatty acid ester (RIKEMAL)" did not satisfy the 5% mass reduction temperature of 150 degrees C or higher according to a measuring method compliant with ISO 7111-1987.

- Antioxidant-

*AO: Hindered phenol-based antioxidant (product name: AO-330, 1,3,5-tris(3,5-di-tert-butyl-4-hydroxyphenylmethyl)-2,4,6-trimethylbenzene, obtained from ADEKA Corporation)
*PEP: Phosphorus-based degradation inhibitor, bis(2,6-di-tert-butyl-4-methylphenyl)pentaerythritol diphosphite (ADEKASTAB PEP-36, obtained from ADEKA Corporation)

From the results in Table 1-1 and Table 1-2, it was revealed that use of appropriate heat-resistant antistatic agents made it possible to reduce adhesion of the thermoplastic resin powders within the apparatus, produce three-dimensional objects having a neat object surface, and obtain objects which it hitherto had been impossible to produce stably.

(Examples 13 to 19 and Comparative Examples 9 and 10)

Thermoplastic resin powders were obtained in the same manner as in Example 1, except that unlike in Example 1, the kinds of resins and antistatic agents presented in Table 2 were used.

Table 2

| | Resin powder | | | | |
|---|---|---|---|---|---|
| | Kind of resin | Antistatic agent (internal additive) | | Antistatic agent (external additive) | |
| | | Kind | Content (% by mass) | Kind | Content (% by mass) |
| Ex. 13 | PP | Carbon nanotube | 4 | None | |
| Ex. 14 | TPX | Carbon nanotube | 4 | None | |
| Ex. 15 | PBT | Carbon nanotube | 4 | None | |
| Ex. 16 | PP | Carbon nanotube | 0.05 | None | |
| Ex. 17 | PP | Carbon nanotube | 6 | None | |

(continued)

| | Resin powder | | | | |
|---|---|---|---|---|---|
| | Kind of resin | Antistatic agent (internal additive) | | Antistatic agent (external additive) | |
| | | Kind | Content (% by mass) | Kind | Content (% by mass) |
| Ex. 18 | PP | Titanium oxide nano particles | 30 | None | |
| Ex. 19 | PP | Carbon black | 35 | None | |
| Comp. Ex. 9 | PP | None | | None | |
| Comp. Ex. 10 | PP | None | | Silica | 0.2 |

The details of the components in Table 2 are as follows.

-Thermoplastic resin-

*PP: Polypropylene resin, obtained from Prime Polymer Co., Ltd., J704UG
*TPX: obtained from Mitsui Chemicals, Inc., TX845
*PBT: Polybutylene terephthalate resin, obtained from Mitsubishi Engineering-Plastics Corporation, 5010

-Heat-resistant antistatic agent-

The following carbon nanotube, titanium oxide nano particles, or carbon black was(were) used as the heat-resistant antistatic agent (internal additive).

- Carbon nanotube (obtained from Toyocolor Co., Ltd., PPM 0KC290 BLK)
- Titanium oxide nano particles (obtained from Ishihara Sangyo Kaisha, Ltd., TTO-51)
- Carbon black (obtained from Tokai Carbon Co., Ltd., TOKABLACK)
  The following fumed silica was used as the heat-resistant antistatic agent (external additive).
- Fumed silica (obtained from Nippon Aerosil Co., Ltd., RA200H)

Next, various properties of each obtained thermoplastic resin powder were measured in the manners described below. The results are presented in Table 3.

<Amount of adhesion>

It is preferable that adhesion of the thermoplastic resin powder to a movable part including the region surrounding the recoater mechanism be absent, because adhesion may become the cause of object production failure, because any resin powder that has scattered, adhered, and accumulated may fall onto a part bed or onto selectively sintered, melted part regions due to, for example, impacts during moving.
After three-dimensional object production was completed, presence or absence of adhesion of the thermoplastic resin powder to a movable part including the region surrounding the recoater mechanism was evaluated according to the following adhesive tape test.

-Adhesive tape test-

The number of particles that adhered to SCOTCH TAPE (obtained from 3M Company), when SCOTCH TAPE was pasted over the roller part of the recoater, which was the movable part having undergone object production, and then peeled was observed with a scanning electron microscope (instrument name: S4200, obtained from Hitachi, Ltd.), and the number of particles that adhered per area was calculated. The test was performed at different three positions, and the average of the obtained measurements was employed. When the number of particles is 100 particles/$cm^2$ or

less, the thermoplastic resin powder is of a practically usable level.

<Surface resistivity and volume resistivity of thermoplastic resin powder>

The surface resistivity and the volume resistivity of each resin powder were measured using resistor cells for high resistivity (obtained from Agilent Technologies, AGILENT 16008B BIAS RESISTIVELY CELL) as electrodes, and a high resistance meter (obtained from Agilent Technologies, AGILENT 4339B HIGH RESISTANCE METER) as a measuring instrument.

<Three-dimensional object production>

Using each obtained thermoplastic resin powder and a SLS-type object producing apparatus (obtained from Ricoh Company, Ltd., AM S5500P), a three-dimensional object was produced. As set conditions, the average layer thickness was 0.1 mm, the recoater moving speed was 100 mm/s, the laser output power was set to 10 watt or higher but 150 watt or lower, the laser scanning space was 0.1 mm, and the part bed temperature was ±3 degrees C from the melting point of the thermoplastic resin powder. The temperature of the supplying tank was lower than or equal to a temperature that was 10 degrees C lower than the melting point.

Next, various properties of the obtained objects were evaluated in the manners described below. The results are presented in Table 3.

-Tensile strength ratio-

Five tensile test specimens were produced along the longer direction of the tensile test specimens, in a manner that the longer dimension of the tensile test specimens would be along the Z axis direction at the center. As the tensile test specimen samples, a 150 mm-length multi-purpose dog-bone-like test specimen (the specimen including a center portion having a length of 80 mm, a thickness of 4 mm, and a width of 10 mm), compliant with international organization for standardization (ISO) 3167 Type 1A was used.

The tensile strength of the obtained three-dimensional objects (tensile test specimen samples) obtained according to an ISO 527-compliant tensile test (obtained from Shimadzu Corporation, AGS-5KN) was divided by the tensile strength of tensile test specimens obtained by injection molding of a resin pellet material of the same grade containing no antistatic agent performed under the conditions recommended by the manufacturer of the material, and converted to percentage, as a tensile strength ratio. The test speed of the tensile test was 50 mm/minute. For calculation, the test was performed five times, and the average of the obtained measurements was employed. When the tensile test ratio was 70% or higher, the thermoplastic resin powder is of a practically usable level.

-Recyclability-

Any excessive powder of the thermoplastic resin powder used for producing the three-dimensional object used for tensile strength evaluation was returned to the supplying tank of the three-dimensional object producing apparatus, to produce a three-dimensional object with the used thermoplastic resin powder. This operation was repeated ten times, to explore the number of times of repetition until which the number of particles that adhered in the adhesive tape test was about 100 particles/$cm^2$ or less, which was the practically usable level, and object production failure due to fall of the powder would not occur.

Table 3

| | Result of evaluation | | | | |
|---|---|---|---|---|---|
| | Surface resistivity (Ω) | Volume resistivity (Ω·cm) | Amount of adhesion (Number of particles/$cm^2$) | Tensile strength ratio (%) | Recyclability of adhesion preventing effect (number of times of repetition) |
| Ex. 13 | $1.35\times10^{12}$ | $7.27\times10^{13}$ | 12 | 102 | 10 or more |
| Ex. 14 | $7.88\times10^{12}$ | $8.94\times10^{13}$ | 20 | 105 | 10 or more |
| Ex. 15 | $3.12\times10^{13}$ | $1.14\times10^{14}$ | 78 | 98 | 10 or more |
| Ex. 16 | $8.53\times10^{13}$ | $6.42\times10^{14}$ | 97 | 99 | 10 or more |
| Ex. 17 | $6.50\times10^{6}$ | $3.20\times10^{5}$ | 10 | 96 | 10 or more |

(continued)

| | Result of evaluation | | | | |
|---|---|---|---|---|---|
| | Surface resistivity (Ω) | Volume resistivity (Ω·cm) | Amount of adhesion (Number of particles/$cm^2$) | Tensile strength ratio (%) | Recyclability of adhesion preventing effect (number of times of repetition) |
| Ex. 18 | $3.34\times10^{13}$ | $4.18\times10^{11}$ | 80 | 84 | 10 or more |
| Ex. 19 | $2.59\times10^{9}$ | $3.22\times10^{7}$ | 5 | 78 | 10 or more |
| Comp. Ex. 9 | $6.07\times10^{14}$ | $7.27\times10^{16}$ | 682 | Object production impossible | - |
| Comp. Ex. 10 | $7.11\times10^{14}$ | $4.87\times10^{16}$ | 81 | 98 | 3 |

[Examples of Second embodiment]

In the following Examples and Comparative Examples, cases of using the resin powder for producing a three-dimensional object as an example of the resin powder will be described.

In the following Examples and Comparative Examples, the number-based primary particle diameter of the resin fine particles was measured in the manner described below.

<Number-based primary particle diameter of resin fine particles>

The number-based primary particle diameter was measured using a flow-type particle image analyzer FPIA3000 obtained from Sysmex Corporation. A solution to be measured was subjected to dispersion by ultrasonic treatment for 5 minutes after a surfactant was added in the solution. In a measurement condition in which the counted number of powder particles was 10,000 or greater, a particle shape image was captured and a number-based particle diameter distribution was obtained.

(Example 101)

Using a biaxial kneader, a conductive material (BIOMICELLE BN-105, obtained from Boron Laboratory Co., Ltd., a conductivity inducing type) (2 parts by mass) was kneaded in polypropylene (PP) resin (obtained from Japan Polypropylene Corporation) (100 parts by mass), to obtain a thermoplastic resin composition.

The obtained thermoplastic resin composition was freeze-crushed into an intended particle diameter of 65 micrometers, to obtain a thermoplastic resin composition powder. Using a Henschel mixer (obtained from Nippon Coke & Engineering Co., Ltd.), the obtained thermoplastic resin composition powder was uniformly mixed with true-spherical resin fine particles (EPOSTER S, obtained from Nippon Shokubai Co., Ltd., with a number-based primary particle diameter of 0.20 micrometers) (0.2% by mass), to obtain a resin powder for producing a three-dimensional object. Freeze-crushing was performed using equipment obtained from Osaka Gas Liquid Co., Ltd. (located in Sakai City, Osaka Prefecture). As the set freeze-crushing conditions, the crushing outlet temperature was from -100 degrees C through -120 degrees C, and the circumferential speed of the crushing equipment was 80.0 m/s. By freeze-crushing, it is possible to arbitrarily adjust the particle diameter of crushing based on the processing amount of crushing.

The volume average particle diameter of the obtained resin powder for producing a three-dimensional object was measured in the manner described below. The result is presented in Table 4-2.

<Measurement of volume average particle diameter of resin powder for producing three-dimensional object>

The volume average particle diameter was measured based on the particle refractive index of each resin using MICROTRAC MT3300EXII obtained from Nikkiso Co., Ltd. The refractive index value was set to 1.48 for the polypropylene resin. The measurement was performed according to a dry (ambient) method without using a solvent.

(Examples 102 to 117 and Comparative Examples 101 and 102)

Resin powders for producing a three-dimensional object of Examples 102 to 117 and Comparative Examples

101 and 102 were obtained in the same manner as in Example 101, except that unlike in Example 101, the process was performed with the conditions changed to as presented in Table 4-1 and Table 4-2.

The volume average particle diameter of each obtained resin powder for producing a three-dimensional object was measured in the same manner as in Example 101. The results are presented in Table 4-2.

(Example 118)

Inorganic fine particles (obtained from Nippon Aerosil Co., Ltd., AEROSIL RA200H) (0.04% by mass) were added to the resin powder obtained in Example 115, to obtain a resin powder for producing a three-dimensional object of Example 118.

The volume average particle diameter of the obtained resin powder for producing a three-dimensional object was measured in the same manner as in Example 101. The result is presented in Table 4-2.

Table 4-1

| | Resin particles | Conductive substance | | | Particle producing method | |
|---|---|---|---|---|---|---|
| | | Product name | Type | Content (% by mass) | Method type | Intended particle diameter (micrometer) |
| Ex. 101 | PP | BIOMICELLE BN-105 | Conductivity inducing type | 2 | Freeze crushing | 65 |
| Ex. 102 | PP | BIOMICELLE BN-105 | Conductivity inducing type | 0.05 | Freeze crushing | 65 |
| Ex. 103 | PP | BIOMICELLE BN-105 | Conductivity inducing type | 11 | Freeze crushing | 65 |
| Ex. 104 | PP | BIOMICELLE BN-105 | Conductivity inducing type | 2 | Freeze crushing | 65 |
| Ex. 105 | PP | BIOMICELLE BN-105 | Conductivity inducing type | 2 | Freeze crushing | 65 |
| Ex. 106 | PP | RIKEMAL | Surface hydrophilizing type | 2 | Freeze crushing | 65 |
| Ex. 107 | PP | PELECTRON HS | Conductivity inducing type | 2 | Freeze crushing | 65 |
| Ex. 108 | PP | BIOMICELLE BN-105 | Conductivity inducing type | 2 | Freeze crushing | 65 |
| Ex. 109 | PP | BIOMICELLE BN-105 | Conductivity inducing type | 2 | Freeze crushing | 65 |
| Ex. 110 | PBT | BIOMICELLE BN-105 | Conductivity inducing type | 2 | Freeze crushing | 65 |
| Ex. 111 | PP | BIOMICELLE BN-105 | Conductivity inducing type | 2 | Freeze crushing | 30 |
| Ex. 112 | PP | BIOMICELLE BN-105 | Conductivity inducing type | 2 | Freeze crushing | 100 |
| Ex. 113 | PP | BIOMICELLE BN-105 | Conductivity inducing type | 2 | Freeze crushing | 30 |
| Ex. 114 | PP | - | - | - | Freeze crushing | 65 |
| Ex. 115 | PP | BIOMICELLE BN-105 | Conductivity inducing type | 2 | Freeze crushing | 65 |
| Ex. 116 | PP | BIOMICELLE BN-105 | Conductivity inducing type | 2 | Freeze crushing | 65 |

(continued)

| | Resin particles | Conductive substance | | | Particle producing method | |
|---|---|---|---|---|---|---|
| | | Product name | Type | Content (% by mass) | Method type | Intended particle diameter (micrometer) |
| Ex. 117 | PP | BIOMICELLE BN-105 | Conductivity inducing type | 2 | Melting/ kneading | 100 |
| Ex. 118 | PP | BIOMICELLE BN-105 | Conductivity inducing type | 2 | Freeze crushing | 65 |
| Comp. Ex. 1 | PP | BIOMICELLE BN-105 | Conductivity inducing type | 2 | Freeze crushing | 65 |
| Comp. Ex. 2 | PP | BIOMICELLE BN-105 | Conductivity inducing type | 2 | Freeze crushing | 65 |

Table 4-2

| | Resin fine particles | | | | Volume average particle diameter (micrometer) |
|---|---|---|---|---|---|
| | Product name | Chargeability | Number-based primary particle diameter (micrometer) | Content(% by mass) | |
| Ex. 101 | EPOSTER S | Positively chargeable | 0.20 | 0.2 | 67 |
| Ex. 102 | EPOSTER S | Positively chargeable | 0.20 | 0.2 | 66 |
| Ex. 103 | EPOSTER S | Positively chargeable | 0.20 | 0.2 | 68 |
| Ex. 104 | EPOSTER S | Positively chargeable | 0.20 | 0.05 | 66 |
| Ex. 105 | EPOSTER S | Positively chargeable | 0.20 | 5.2 | 67 |
| Ex. 106 | EPOSTER S | Positively chargeable | 0.20 | 0.2 | 66 |
| Ex. 107 | EPOSTER S | Positively chargeable | 0.20 | 0.2 | 66 |
| Ex. 108 | EPOSTER S6 | Positively chargeable | 0.40 | 0.2 | 66 |
| Ex. 109 | CHEMISNOW MP-1451 | Negatively chargeable | 0.15 | 0.2 | 67 |
| Ex. 110 | EPOSTER S | Positively chargeable | 0.20 | 0.2 | 67 |
| Ex. 111 | EPOSTER S | Positively chargeable | 0.20 | 0.2 | 31 |
| Ex. 112 | EPOSTER S | Positively chargeable | 0.20 | 0.2 | 99 |
| Ex. 113 | EPOSTER S | Positively chargeable | 0.20 | 0.2 | 29 |

(continued)

| | Resin fine particles | | | | Volume average particle diameter (micrometer) |
|---|---|---|---|---|---|
| | Product name | Chargeability | Number-based primary particle diameter (micrometer) | Content(% by mass) | |
| Ex. 114 | EPOSTER S | Positively chargeable | 0.20 | 0.2 | 67 |
| Ex. 115 | EPOSTER S12 | Positively chargeable | 1.20 | 0.2 | 66 |
| Ex. 116 | CHEMISNOW MX-150 | Negatively chargeable | 1.50 | 10.1 | 67 |
| Ex. 117 | EPOSTER SS | Positively chargeable | 0.10 | 0.04 | 99 |
| Ex. 118 | EPOSTER S12 | Positively chargeable | 1.20 | 0.2 | 66 |
| Comp. Ex. 1 | - | - | - | - | 66 |
| Comp. Ex. 2 | CHEMISNOW MX-180TA | Negatively chargeable | 1.80 | 9.0 | 66 |

The details of the components in Table 4-1 and Table 4-2 are as follows.

-Thermoplastic resin-

*PP: Polypropylene resin, obtained from Japanese Polypropylene Corporation, NOVATEC PP BC4BSW (block polymerization)

*PBT: Polybutylene terephthalate resin, obtained from Mitsubishi Engineering-Plastics Corporation

-Conductive substance-

* BIOMICELLE BN-105: obtained from Boron Laboratory Co., Ltd., a conductivity inducing type
* PELECTRON HS: obtained from Sanyo Chemical Industries, Ltd.), a conductivity inducing type
* RIKEMAL: glycerin fatty acid ester, obtained from Riken Vitamin Co., Ltd., a surface hydrophilizing type

-Resin fine particles-

* EPOSTER SS: obtained from Nippon Shokubai Co., Ltd., a true-spherical shape, positively chargeable
* EPOSTER S: obtained from Nippon Shokubai Co., Ltd., a true spherical shape, positively chargeable
* EPOSTER S6: obtained from Nippon Shokubai Co., Ltd., a true spherical shape, positively chargeable
* EPOSTER S12: obtained from Nippon Shokubai Co., Ltd., a true spherical shape, positively chargeable
*CHEMISNOW MP-1451: obtained from Soken Chemical & Engineering Co., Ltd., a true spherical shape, negatively chargeable
* CHEMISNOW MX-150: obtained from Soken Chemical & Engineering Co., Ltd., a true spherical shape, negatively chargeable
* CHEMISNOW MX-180TA: obtained from Soken Chemical & Engineering Co., Ltd., a true spherical shape, negatively chargeable

Next, three-dimensional object production was performed in the manner described below using the resin powders for producing a three-dimensional object of Examples 101 to 118 and Comparative Examples 101 and 102, to obtain three-dimensional objects.

<Production of three-dimensional object>

Three-dimensional objects were produced using AMS5500P obtained from Ricoh Company, Ltd., which was a SLS-type producing apparatus illustrated in FIG. 5 and the resin powders for producing a three-dimensional object obtained in Examples 101 to 118 and Comparative Examples 101 and 102.

Pre-treatment of the resin powders for producing a three-dimensional object was performed at reduced vacuum pressure at 45 degrees C for 8 hours. As the set conditions for layer lamination, the layer lamination thickness was 0.1 mm, and the recoating speed was 10 cm/s.

Next, various properties of each resin powder for producing a three-dimensional object and each three-dimensional object were evaluated in the manners described below. The results are presented in Table 5.

<Dimensional stability of three-dimensional object>

To evaluate dimensional stability, the dimensions of the three-dimensional object were measured using Vernier caliper, and dimensional stability was evaluated according to the criteria described below. The grades A, B, and C among the evaluation criteria mean that the quality of the three-dimensional object was nonproblematic.

[Evaluation criteria]

A: The three-dimensional object had no roughness over the surface and had a difference of within ±1% from the set dimensions.

B: The three-dimensional object had no roughness over the surface and had a difference of within ±2% from the set dimensions.

C: The three-dimensional object had roughness over the surface, or had a difference of greater than ±2% from the set dimensions.

D: The three-dimensional object had dents or protrusions in or over the surface.

<Density of three-dimensional object>

The density of the three-dimensional object was calculated according to the mathematical formula described below based on the weight and volume of the three-dimensional object measured in the manner described below, and evaluated according to the criteria described below. The grades A, B, and C among the evaluation criteria mean that the three-dimensional object was nonproblematic.

$$\text{Density of object} = [\text{Actually measured weight (g) of object}]/[\text{Volume (cm}^3\text{) of object calculated from the dimensions measured with Vernier caliper}]$$

[Evaluation criteria]

A: The density of the three-dimensional object was higher than or equal to 98% of the true density of the raw material resin used.

B: The density of the three-dimensional object was higher than or equal to 95% but lower than 98% of the true density of the raw material resin used.

C: The density of the three-dimensional object was higher than or equal to 90% but lower than 95% of the true density of the raw material resin used.

D: The density of the three-dimensional object was lower than 90% of the true density of the raw material resin used.

<Surface smoothness of three-dimensional object>

The surface smoothness of the three-dimensional object was measured using a three-dimensional measuring instrument (obtained from Keyence Corporation, VR3200), and evaluated according to the criteria described below. The grades A and B among the evaluation criteria mean that the three-dimensional object was nonproblematic.

[Evaluation criteria]

A: The surface of the three-dimensional object did not have roughness that was 20 micrometers or greater but less than 40 micrometers.
B: The surface of the three-dimensional object did not have roughness that was 40 micrometers or greater but less than 80 micrometers.
C: The surface of the three-dimensional object did not have roughness that was 80 micrometers or greater.
D: The surface of the three-dimensional object had roughness that was greater than 80 micrometers.

<Chargeability of resin powder for producing three-dimensional object>

During production of a three-dimensional object, the surface potential (V) of the resin powder for producing a three-dimensional object was measured using a surface electrometer (obtained from Kasuga Denki Inc., KSD-2000) and evaluated according to the criteria described below. The measured portion was the top surface of the laminated object forming layers after object production was completed.

[Evaluation criteria]

A: The absolute value of the surface potential was 50 V or lower.
B: The absolute value of the surface potential was higher than 50 V but lower than or equal to 100 V
C: The absolute value of the surface potential was higher than 100 V but lower than or equal to 1,000 V.
D: The absolute value of the surface potential was higher than 1,000 V.

<Recoatability of resin powder for producing three-dimensional object>

During production of a three-dimensional object, recoatability of the resin powder for producing a three-dimensional object was visually observed and evaluated according to the criteria described below. The observed portion was the surface of a layer laminated in the object forming tank during production of the three-dimensional object.

[Evaluation criteria]

A: The surface of the laminated layer in the object forming tank was smooth.
B: The surface of the laminated layer in the object forming tank was fluffy.
C: There was a lump (including an aggregate) over the surface of the laminated layer in the object forming tank.
D: There was a streak in the surface of the laminated layer in the object forming tank.

Table 5

| | Three-dimensional object | | | Resin powder | | Total evaluation |
|---|---|---|---|---|---|---|
| | Dimensional stability | Density | Surface smoothness | Chargeability | Recoatability | |
| Ex. 101 | A | A | A | A | A | A |
| Ex. 102 | A | A | A | A | A | A |
| Ex. 103 | A | B | B | A | B | B |

(continued)

| | Three-dimensional object | | | Resin powder | | Total evaluation |
|---|---|---|---|---|---|---|
| | Dimensional stability | Density | Surface smoothness | Chargeability | Recoatability | |
| Ex. 104 | A | A | A | A | A | A |
| Ex. 105 | B | B | A | A | A | A |
| Ex. 106 | A | A | B | B | B | B |
| Ex. 107 | A | A | A | A | A | A |
| Ex. 108 | A | A | A | A | A | A |
| Ex. 109 | A | A | B | A | B | B |
| Ex. 110 | A | A | A | A | A | A |
| Ex. 111 | B | B | A | A | A | A |
| Ex. 112 | A | A | A | A | A | A |
| Ex. 113 | B | C | A | A | A | B |
| Ex. 114 | B | B | A | D | A | B |
| Ex. 115 | C | C | A | A | A | B |
| Ex. 116 | C | C | B | A | C | B |
| Ex. 117 | A | A | A | A | A | A |
| Ex. 118 | B | A | A | A | A | A |
| Comp. Ex. 1 | D | D | D | A | D | D |
| Comp. Ex. 2 | C | D | C | A | C | C |

From the results of Examples in Table 5, it was confirmed that the resin fine particles having a number-based primary particle diameter of 1.50 micrometers or less enabled a high fluidity, to enable the three-dimensional object to satisfy dimensional stability and density. On the other hand, in Comparative Example 101 in which no resin fine particles were contained, the three-dimensional object did not satisfy dimensional stability and density. In Comparative Example 102 in which the number-based primary particle diameter of the resin fine particles was greater than 1.50 micrometers, dimensional stability and density were not satisfied.

Aspects of the first embodiment are, for example, as follows.

<1> A thermoplastic resin powder, including
a heat-resistant antistatic agent in an amount of 0.01% by mass or greater but 30.0% by mass or less.

<2> The thermoplastic resin powder according to <1>,
wherein the thermoplastic resin powder includes the heat-resistant antistatic agent in an amount of 0.1% by mass or greater but 5.0% by mass or less.

<3> The thermoplastic resin powder according to <1> or <2>,
wherein the thermoplastic resin powder includes the heat-resistant antistatic agent in an amount of 0.1% by mass or greater but 5.0% by mass or less, a 5% mass reduction temperature of the heat-resistant antistatic agent according to a measuring method compliant with ISO 7111-1987 being 150 degrees C or higher.

<4> The thermoplastic resin powder according to any one of <1> to <3>,
wherein a 50% cumulative volume-based particle diameter of the thermoplastic resin powder is 5 micrometers or greater but 200 micrometers or less, and
wherein a ratio (Mv/Mn) of a volume average particle diameter (Mv) of the thermoplastic resin powder to a number average particle diameter (Mn) of the thermoplastic resin powder is 2.00 or less.

<5> The thermoplastic resin powder according to <4>,
wherein the ratio (Mv/Mn) is 1.30 or less.

<6> The thermoplastic resin powder according to any one of <1> to <5>,
wherein a melting point of the thermoplastic resin powder according to a measuring method compliant with ISO 3146 is 100 degrees C or higher.

<7> The thermoplastic resin powder according to any one of <1> to <6>,
wherein a surface resistivity of the thermoplastic resin powder is $1\times10^5$ Ω or higher but $1\times10^{14}$ Ω or lower.
<8> The thermoplastic resin powder according to any one of <1> to <7>,
wherein a volume resistivity of the thermoplastic resin powder is $1\times10^5$ Ω·cm or higher but $1\times10^{15}$ Ω·cm or lower.
<9> The thermoplastic resin powder according to any one of <1> to <8>,
wherein a high-temperature resistivity of the thermoplastic resin powder is $1\times10^5$ Ω·cm or higher but $1\times10^{15}$ Ω·cm or lower.
<10> The thermoplastic resin powder according to any one of <1> to <9>, further including
an antioxidant.
<11> The thermoplastic resin powder according to <10>,
wherein as the antioxidant, the thermoplastic resin powder includes a phosphorus-based antioxidant in an amount of 0.10% by mass or greater but 0.8% by mass or less, and a phenol-based antioxidant in an amount of 0.05% by mass or greater but 0.2% by mass or less.
<12> The thermoplastic resin powder according to any one of <1> to <11>,
wherein the heat-resistant antistatic agent is a donor-acceptor-hybrid-type antistatic agent formed of a composition containing: one or more kinds of a semipolar organic compound that contain in a molecule thereof, one group of atoms represented by structural formula (1) below and at least one straight-chain saturated hydrocarbon group containing from 11 through 22 carbon atoms; and one or more kinds of a basic organic compound that contains in a molecule thereof, one group of basic nitrogen atoms and at least one straight-chain saturated hydrocarbon group containing from 11 through 22 carbon atoms

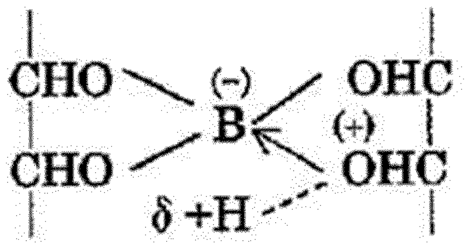

------- (1)

<13> The thermoplastic resin powder according to any one of <1> to <12>,
wherein the thermoplastic resin powder includes a columnar particle, and
wherein a ratio of a height of a longer side of the columnar particle to a diameter of a bottom surface of the columnar particle is 0.5 times or higher but 2 times or lower.
<14> The thermoplastic resin powder according to any one of <1> to <13>,
wherein the thermoplastic resin powder includes an approximately circular cylindrical body, a diameter of a bottom surface of the approximately circular cylindrical body is 5 micrometers or greater but 200 micrometers or less, and a height of the approximately circular cylindrical body is 5 micrometers or greater but 200 micrometers or less, or wherein the thermoplastic resin powder includes a rectangular parallelepiped body, each side of a bottom surface of the rectangular parallelepiped body is 5 micrometers or greater but 200 micrometers or less, and a height of the rectangular parallelepiped body is 5 micrometers or greater but 200 micrometers or less.
<15> The thermoplastic resin powder according to any one of <1> to <14>,
wherein a density of the thermoplastic resin powder is 0.8 g/cm$^3$ or higher but 1.4 g/cm$^3$ or lower.
<16> The thermoplastic resin powder according to any one of <1> to <15>,
wherein a ratio of mass reduction of the thermoplastic resin powder through heating for 4 hours at a temperature that is 10 degrees C lower than a melting point of the thermoplastic resin powder is 0.65% by mass or lower, wherein the ratio of mass reduction is measured by a TG-DTA method.
<17> A resin powder for producing a three-dimensional object, the resin powder including
the thermoplastic resin powder according to any one of <1> to <16>.
<18> A resin powder for producing a three-dimensional object, the resin powder including
a heat-resistant antistatic agent in an amount of 0.01% by mass or greater but 30.0% by mass or less,
wherein the resin powder has a surface charge potential of within ±100 V when measured according to a triboelectric charging method under conditions described below, [Conditions]
after the resin powder for producing a three-dimensional object is supplied from a supplying tank to an object forming tank with a stainless steel recoater rotated at 500 m/minute for 10 minutes at a temperature that is 10 degrees C lower than a melting point of the resin powder for producing a three-dimensional object, the surface charge potential at a surface of a powder layer in the object forming tank at 100 degrees C is measured.
<19> A three-dimensional object producing apparatus, including:

a supplying tank that stores the thermoplastic resin powder according to any one of <1> to <16>;
a supplying unit configured to supply the thermoplastic resin powder stored in the supplying tank;
a layer forming unit configured to form a layer containing the thermoplastic resin powder; and
a curing unit configured to cure the layer.

<20> A three-dimensional object producing method including:

forming a layer containing the thermoplastic resin powder according to any one of <1> to <16>; and
curing the layer,
wherein the three-dimensional object producing method repeats the forming and the curing.

The thermoplastic resin powder according to any one of <1> to <16>, the resin powder for producing a three-dimensional object according to <17> or <18>, the three-dimensional object producing apparatus according to <19>, and the three-dimensional object producing method according to <20> can solve the various problems in the related art and achieve the object of the present disclosure.
Aspects of the second embodiment are, for example, as follows.

<1> A resin powder including:

resin particles; and
resin fine particles having a number-based primary particle diameter of 1.50 micrometers or less.

<2> The resin powder according to <1>,
wherein the resin powder has a volume average particle diameter of 30 micrometers or greater but 100 micrometers or less.
<3> The resin powder according to <1> or <2>,
wherein the resin particles contain a conductive substance.
<4> The resin powder according to <3>,
wherein a content of the conductive substance is 0.05% by mass or greater but 10% by mass or less relative to the resin particles.
<5> The resin powder according to <3> or <4>,
wherein the conductive substance is a conductivity inducing-type substance.
<6> The resin powder according to any one of <1> to <5>,
wherein a content of the resin fine particles is 0.05% by mass or greater but 10.0% by mass or less.
<7> The resin powder according to any one of <1> to <6>,
wherein the resin fine particles are a positively chargeable substance.
<8> The resin powder according to any one of <1> to <7>,
wherein the resin powder contains inorganic fine particles in a content of 0.05% by mass or less.
<9> The resin powder according to any one of <1> to <8>,
wherein a resin constituting the resin particles is a thermoplastic resin.
<10> The resin powder according to <9>,
wherein the thermoplastic resin has crystallinity.
<11> The resin powder according to <10>,
wherein the thermoplastic resin having crystallinity contains polypropylene.
<12> The resin powder according to any one of <1> to <11>,
wherein the resin particles contain at least one selected from the group consisting of melamine-based compounds and acrylic-based compounds.
<13> A resin powder for producing a three-dimensional object, the resin powder including
the resin powder according to any one of <1> to <12>.
<14> A three-dimensional object including:
the resin powder for producing a three-dimensional object according to <13>.
<15> A three-dimensional object producing method including:

forming a powder material layer formed of the resin powder for producing a three-dimensional object according to <13>; and
melting the powder material layer,
wherein the three-dimensional object producing method repeats the forming and the melting to produce a three-dimensional object.

<16> A three-dimensional object producing apparatus including:

a powder material layer forming unit configured to form a powder material layer formed of the resin powder for producing a three-dimensional object according to <13>; and
a melting unit configured to melt the powder material layer.

The resin powder according to any one of <1> to <12>, the resin powder for producing a three-dimensional object according to <13>, the three-dimensional object according to <14>, the three-dimensional object producing method according to <15>, and the three-dimensional object producing apparatus according to <16> can solve the various problems in the related art and achieve the object of the present disclosure.

## Claims

1. A thermoplastic resin powder comprising
a heat-resistant antistatic agent in an amount of 0.01% by mass or greater but 30.0% by mass or less.

2. The thermoplastic resin powder according to claim 1,
wherein the thermoplastic resin powder comprises the heat-resistant antistatic agent in an amount of 0.1% by mass or greater but 5.0% by mass or less, a 5% mass reduction temperature of the heat-resistant antistatic agent according to a measuring method compliant with ISO 7111-1987 being 150 degrees C or higher.

3. The thermoplastic resin powder according to claim 1 or 2,
wherein a 50% cumulative volume-based particle diameter of the thermoplastic resin powder is 5 micrometers or greater but 200 micrometers or less, and
wherein a ratio (Mv/Mn) of a volume average particle diameter (Mv) of the thermoplastic resin powder to a number average particle diameter (Mn) of the thermoplastic resin powder is 2.00 or less.

4. The thermoplastic resin powder according to any one of claims 1 to 3,
wherein a melting point of the thermoplastic resin powder according to a measuring method compliant with ISO 3146 is 100 degrees C or higher.

5. The thermoplastic resin powder according to any one of claims 1 to 4,
wherein the heat-resistant antistatic agent is a donor-acceptor-hybrid-type antistatic agent formed of a composition containing: one or more kinds of a semipolar organic compound that contains in a molecule thereof, one group of atoms represented by structural formula (1) below and at least one straight-chain saturated hydrocarbon group containing from 11 through 22 carbon atoms; and one or more kinds of a basic organic compound that contains in a molecule thereof, one group of basic nitrogen atoms and at least one straight-chain saturated hydrocarbon group containing from 11 through 22 carbon atoms,

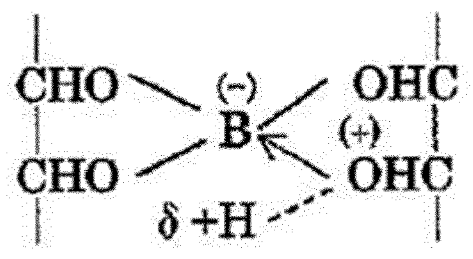

······· (1)

6. A resin powder comprising:

resin particles; and
resin fine particles having a number-based primary particle diameter of 1.50 micrometers or less.

7. The resin powder according to claim 6,
wherein the resin powder has a volume average particle diameter of 30 micrometers or greater but 100 micrometers or less.

**8.** The resin powder according to claim 6 or 7,
wherein the resin particles contain a conductive substance, and
wherein a content of the conductive substance is 0.05% by mass or greater but 10% by mass or less relative to the resin particles.

**9.** The resin powder according to claim 8,
wherein the conductive substance is a conductivity inducing-type substance.

**10.** The resin powder according to any one of claims 6 to 9,
wherein a content of the resin fine particles is 0.05% by mass or greater but 10.0% by mass or less.

**11.** The resin powder according to any one of claims 6 to 10,
wherein the resin fine particles are a positively chargeable substance.

**12.** The resin powder according to any one of claims 6 to 11,
wherein the resin powder contains inorganic fine particles in an amount of 0.05% by mass or less.

**13.** The resin powder according to any one of claims 6 to 12,
wherein a resin constituting the resin particles contains polypropylene.

**14.** The resin powder according to any one of claims 6 to 13,
wherein the resin particles contain at least one selected from the group consisting of melamine-based compounds and acrylic-based compounds.

**15.** A three-dimensional object producing method comprising:

forming a powder material layer formed of a resin powder for producing a three-dimensional object, wherein the resin powder for producing a three-dimensional object comprises the resin powder according to any one of claims 6 to 14; and
melting the powder material layer,
wherein the three-dimensional object producing method repeats the forming and the melting to produce a three-dimensional object.

FIG. 1A

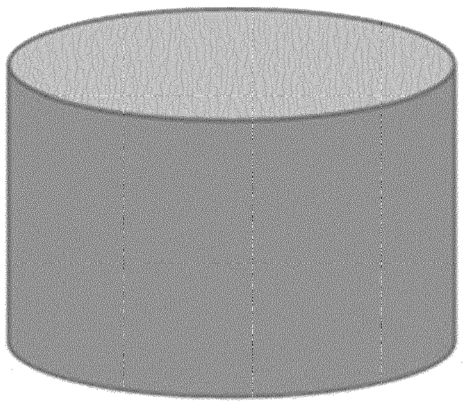

FIG. 1B

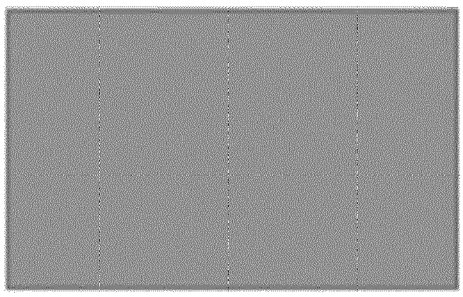

FIG. 1C

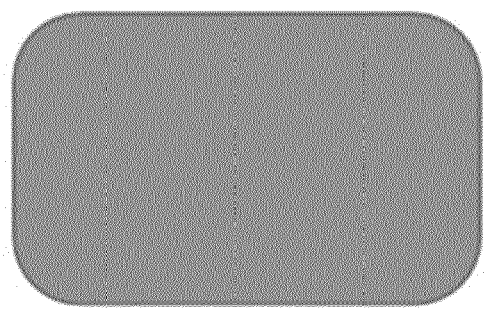

FIG. 1D

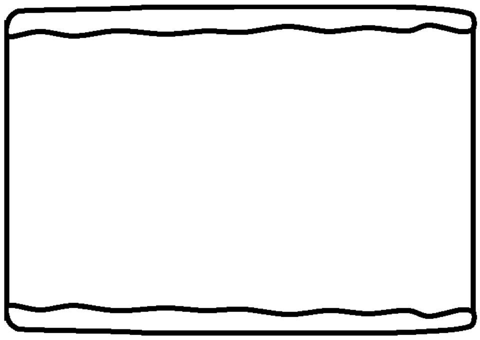

FIG. 1E

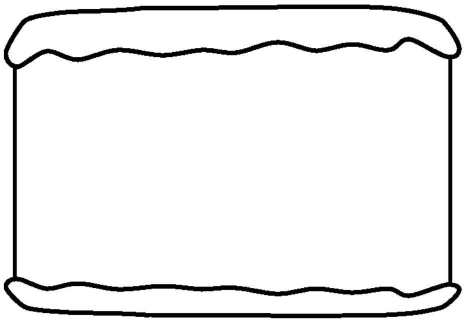

FIG. 1F

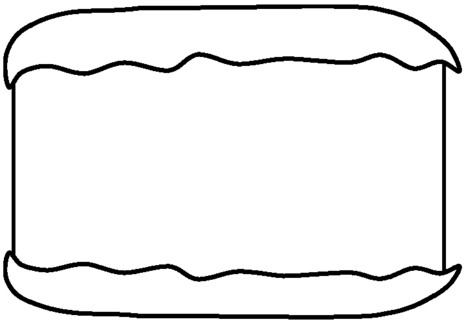

FIG. 1G

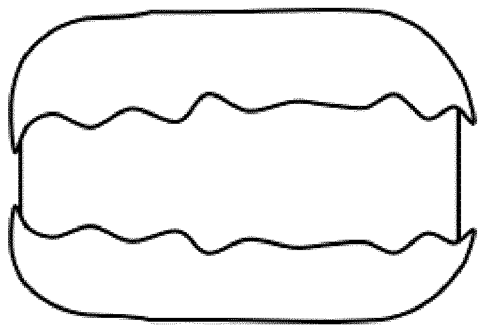

FIG. 1H

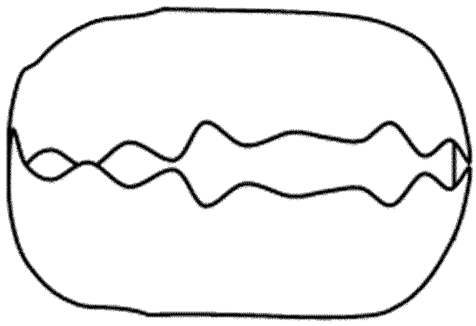

FIG. 1I

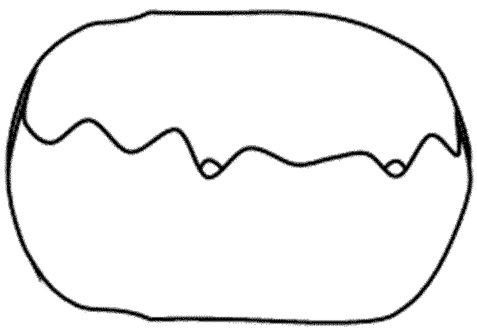

FIG. 2

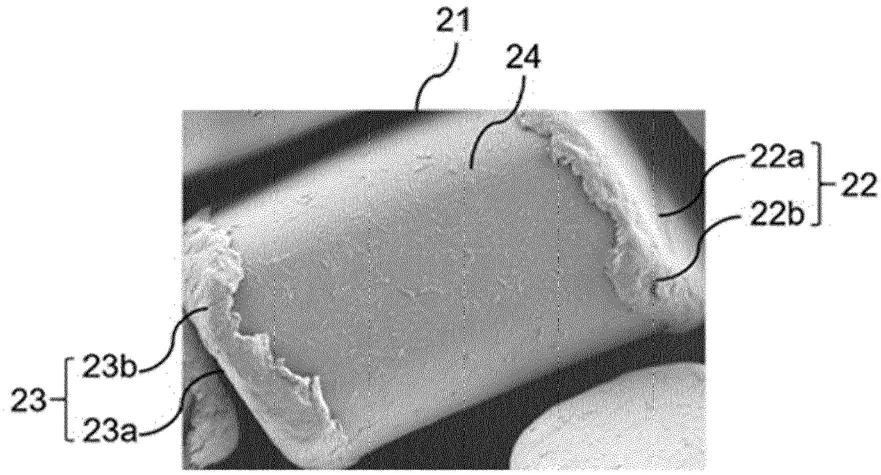
21
24
22a
22
22b
23b
23
23a

FIG. 3

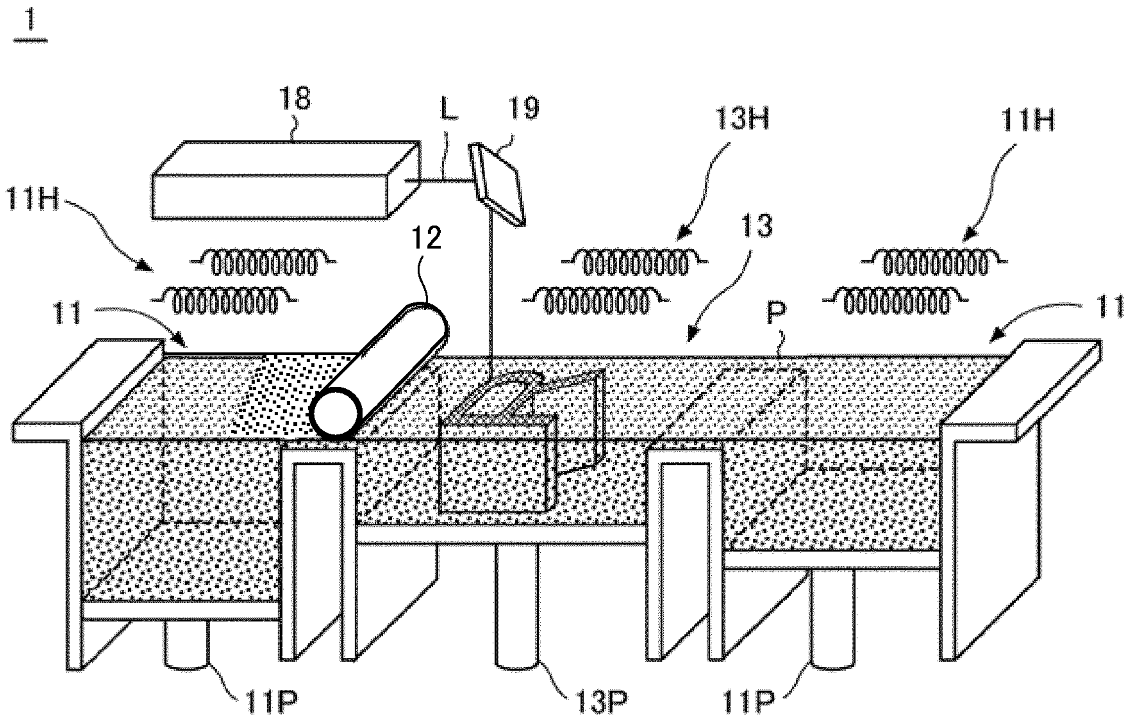
1
18
L
19
13H
11H
11H
12
13
11
P
11
11P
13P
11P

FIG. 4

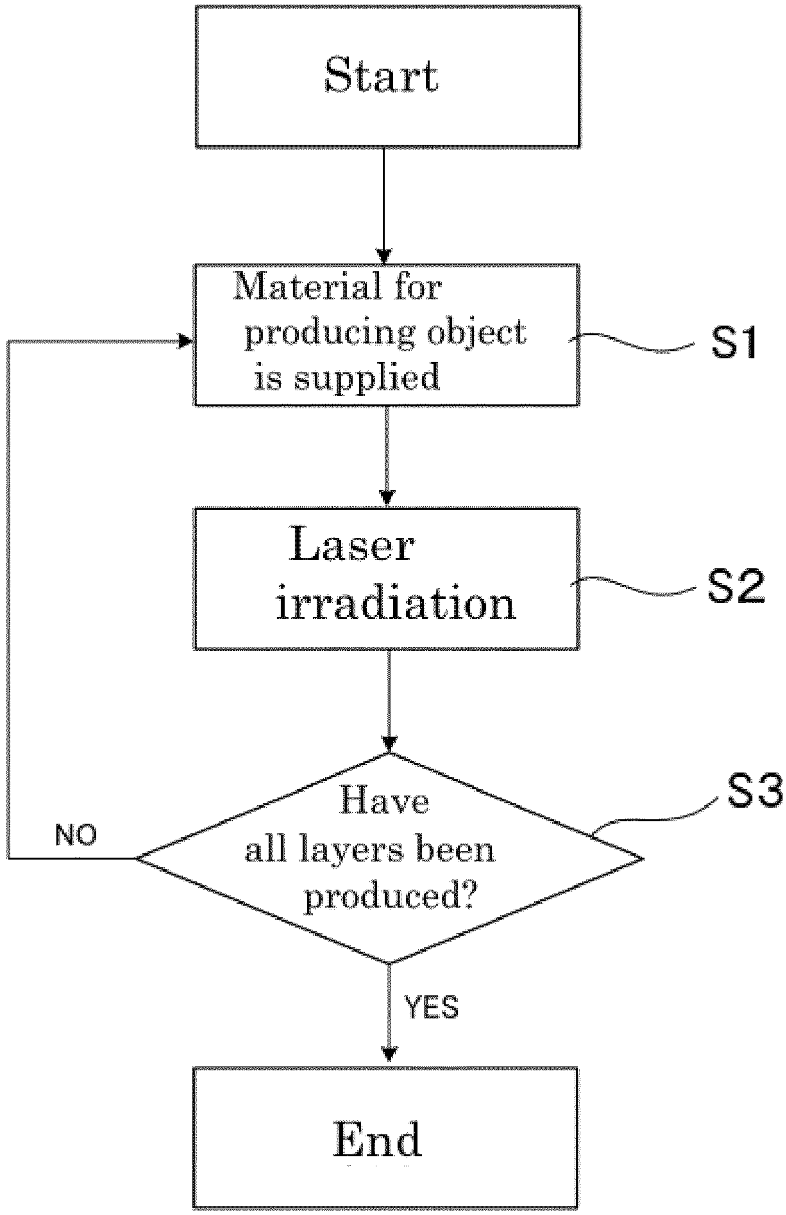
Start
Material for producing object is supplied
S1
Laser irradiation
S2
Have all layers been produced?
S3
NO
YES
End

FIG. 5

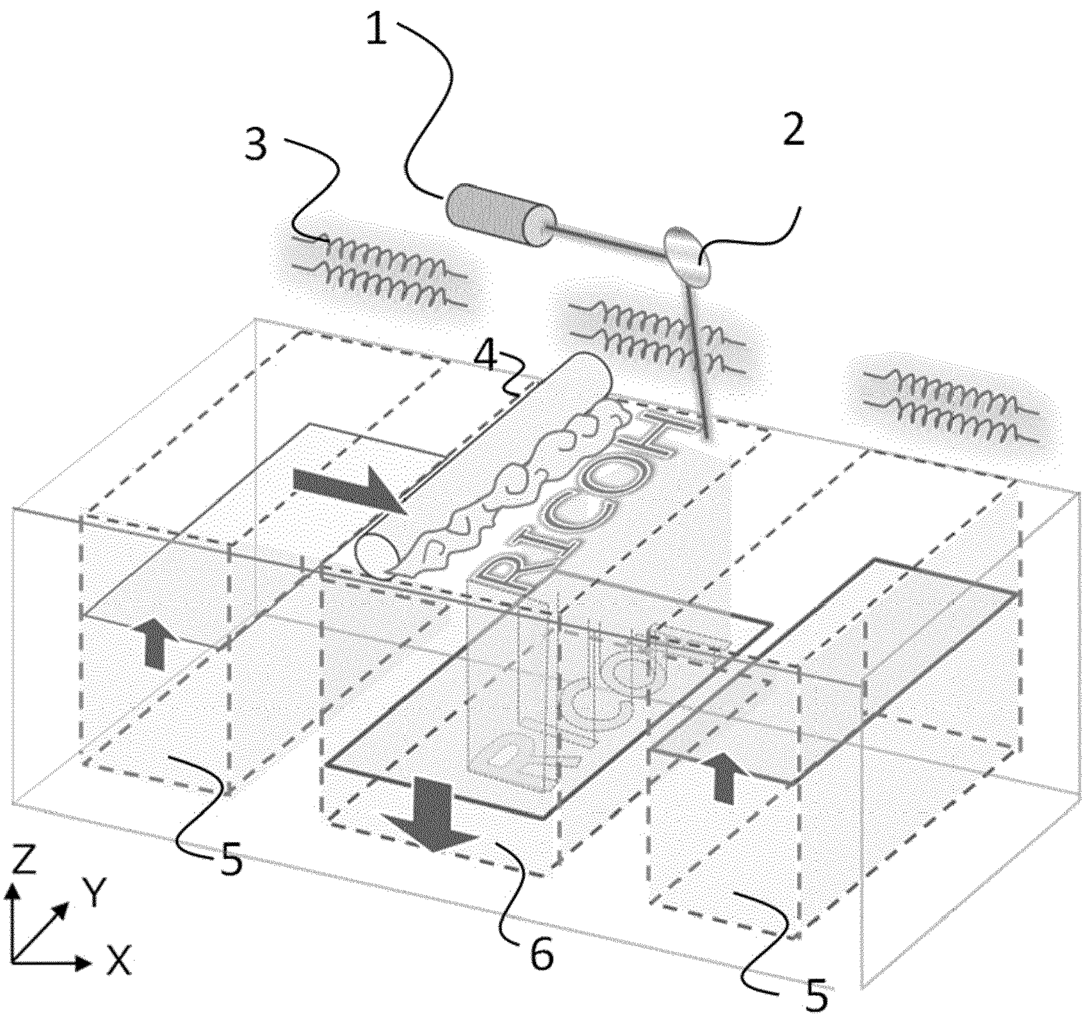

Europäisches Patentamt
European Patent Office
Office européen des brevets

# EUROPEAN SEARCH REPORT

Application Number
EP 20 17 4687

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/362539 A1 (HAMANAKA HIROYOSHI [JP]) 15 December 2016 (2016-12-15)<br>* paragraphs [0119] - [0120]; examples 31-38 * | 1,2,4,5 | INV.<br>B29C64/153<br>C08K5/17<br>C08K5/00<br>C08K3/04<br>C08L23/10 |
| A | EP 3 415 563 A1 (RICOH CO LTD [JP]) 19 December 2018 (2018-12-19)<br>* paragraph [0010]; claims * | 1-15 | |
| A | US 2018/022024 A1 (SAITO AKIRA [JP] ET AL) 25 January 2018 (2018-01-25)<br>* examples * | 12 | |
| A | EP 3 375 608 A1 (RICOH CO LTD [JP]) 19 September 2018 (2018-09-19)<br>* claims; figures; examples * | 1-15 | |
| A | US 2018/273707 A1 (PRICE BRIAN [US]) 27 September 2018 (2018-09-27)<br>* claims; figures * | 6-15 | |
| X<br><br><br><br><br><br><br>Y | DATABASE WPI<br>Week 201830<br>Thomson Scientific, London, GB;<br>AN 2018-32167P<br>XP002800043,<br>& WO 2018/074353 A1 (TORAY IND INC) 26 April 2018 (2018-04-26)<br>* abstract; claims; examples * | 6,7,10,15<br><br><br><br><br><br><br>8,9 | TECHNICAL FIELDS SEARCHED (IPC)<br>B29C<br>C08K<br>C08L |
| X | DATABASE WPI<br>Week 201832<br>Thomson Scientific, London, GB;<br>AN 2018-283576<br>XP002800044,<br>& WO 2018/066706 A1 (TAIYO NIPPON SANSO CORP) 12 April 2018 (2018-04-12)<br>* abstract; examples * | 1,3 | |

-/--

The present search report has been drawn up for all claims

1

| Place of search | Date of completion of the search | Examiner |
|---|---|---|
| Munich | 14 August 2020 | Masson, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 20 17 4687

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/148467 A1 (GREGER MARCUS [NL] ET AL) 28 May 2015 (2015-05-28)<br>* paragraph [0055]; examples *<br>----- | 1,3,15 | |
| Y | DATABASE WPI<br>Week 201850<br>Thomson Scientific, London, GB;<br>AN 2018-52535G<br>XP002800045,<br>& WO 2018/122734 A1 (SABIC GLOBAL TECHNOLOGIES BV) 5 July 2018 (2018-07-05) | 8,9 | |
| A | * abstract *<br>----- | 1,15 | |
| | | | TECHNICAL FIELDS SEARCHED (IPC) |

The present search report has been drawn up for all claims

1

| Place of search | Date of completion of the search | Examiner |
|---|---|---|
| Munich | 14 August 2020 | Masson, Patrick |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................
& : member of the same patent family, corresponding document

page 2 of 2

# ANNEX TO THE EUROPEAN SEARCH REPORT ON EUROPEAN PATENT APPLICATION NO. EP 20 17 4687

This annex lists the patent family members relating to the patent documents cited in the above-mentioned European search report.
The members are as contained in the European Patent Office EDP file on
The European Patent Office is in no way liable for these particulars which are merely given for the purpose of information.

14-08-2020

| Patent document cited in search report | Publication date | Patent family member(s) | Publication date |
|---|---|---|---|
| US 2016362539 A1 | 15-12-2016 | CN 105164224 A | 16-12-2015 |
| | | EP 2957614 A1 | 23-12-2015 |
| | | JP 5734491 B1 | 17-06-2015 |
| | | JP 2015199880 A | 12-11-2015 |
| | | KR 20150123271 A | 03-11-2015 |
| | | US 2016362539 A1 | 15-12-2016 |
| | | WO 2015156133 A1 | 15-10-2015 |
| EP 3415563 A1 | 19-12-2018 | EP 3415563 A1 | 19-12-2018 |
| | | US 2018355144 A1 | 13-12-2018 |
| US 2018022024 A1 | 25-01-2018 | CN 107674389 A | 09-02-2018 |
| | | EP 3272788 A1 | 24-01-2018 |
| | | US 2018022024 A1 | 25-01-2018 |
| EP 3375608 A1 | 19-09-2018 | EP 3375608 A1 | 19-09-2018 |
| | | US 2018264721 A1 | 20-09-2018 |
| US 2018273707 A1 | 27-09-2018 | CN 108025493 A | 11-05-2018 |
| | | EP 3344442 A1 | 11-07-2018 |
| | | JP 6552727 B2 | 31-07-2019 |
| | | JP 2018529008 A | 04-10-2018 |
| | | KR 20180050355 A | 14-05-2018 |
| | | US 2018273707 A1 | 27-09-2018 |
| | | WO 2017040893 A1 | 09-03-2017 |
| WO 2018074353 A1 | 26-04-2018 | CN 109689788 A | 26-04-2019 |
| | | EP 3530701 A1 | 28-08-2019 |
| | | JP WO2018074353 A1 | 22-08-2019 |
| | | US 2020055234 A1 | 20-02-2020 |
| | | WO 2018074353 A1 | 26-04-2018 |
| WO 2018066706 A1 | 12-04-2018 | CN 109844015 A | 04-06-2019 |
| | | EP 3524642 A1 | 14-08-2019 |
| | | JP 6585856 B2 | 02-10-2019 |
| | | JP WO2018066706 A1 | 29-08-2019 |
| | | KR 20190066022 A | 12-06-2019 |
| | | SG 11201902951T A | 30-05-2019 |
| | | TW 201829599 A | 16-08-2018 |
| | | US 2020048376 A1 | 13-02-2020 |
| | | WO 2018066706 A1 | 12-04-2018 |
| US 2015148467 A1 | 28-05-2015 | CN 105849185 A | 10-08-2016 |
| | | EP 3074465 A1 | 05-10-2016 |
| | | JP 2016538395 A | 08-12-2016 |
| | | KR 20160090849 A | 01-08-2016 |

EPO FORM P0459

For more details about this annex : see Official Journal of the European Patent Office, No. 12/82

page 1 of 2

## ANNEX TO THE EUROPEAN SEARCH REPORT ON EUROPEAN PATENT APPLICATION NO.

EP 20 17 4687

This annex lists the patent family members relating to the patent documents cited in the above-mentioned European search report. The members are as contained in the European Patent Office EDP file on
The European Patent Office is in no way liable for these particulars which are merely given for the purpose of information.

14-08-2020

| Patent document cited in search report | Publication date | Patent family member(s) | Publication date |
|---|---|---|---|
| | | RU 2016125264 A | 09-01-2018 |
| | | TW 201529287 A | 01-08-2015 |
| | | US 2015148467 A1 | 28-05-2015 |
| | | WO 2015081001 A1 | 04-06-2015 |
| WO 2018122734 A1 | 05-07-2018 | CN 110225814 A | 10-09-2019 |
| | | EP 3562650 A1 | 06-11-2019 |
| | | KR 20190099287 A | 26-08-2019 |
| | | WO 2018122734 A1 | 05-07-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2015159834 A
- JP 4846425 B
- WO 2008057844 A
- JP 2000328106 A
- JP 3607300 B
- US 6531086 B
- US 2000328106 B
- US 3607300 A